# EUROPÄISCHE PATENTSCHRIFT

(11) **EP 1 548 324 B1**
(45) Veröffentlichungstag und Bekanntmachung des Hinweises auf die Patenterteilung: **10.01.2007**
(21) Anmeldenummer: 04027356.7
(22) Anmeldetag: 18.11.2004
(51) Int. Cl.: F16F 15/131

(54) **Drehmomentübertragungssystem**
Torque transmission system
Systéme de transmission de couple

(30) Priorität: 27.11.2003 DE 10355531
(43) Veröffentlichungstag der Anmeldung: 29.06.2005
(73) Patentinhaber: ZF FRIEDRICHSHAFEN AG, 88046 Friedrichshafen (DE)
(72) Erfinder: Dögel, Thomas, 97688 Bad Kissingen (DE); Kister, Igor, 97076 Würzburg (DE); Feldhaus, Reinhard, 97464 Niederwerrn (DE)

(56) Entgegenhaltungen:
- DE-A- 3 418 671
- DE-A- 3 627 784
- DE-A- 3 941 251
- DE-A- 10 231 766
- DE-A- 19 519 363
- DE-C- 3 448 479

## Beschreibung

Die vorliegende Erfindung betrifft ein Drehmomentübertragungssystem, umfassend eine Schwingungsdämpfungsanordnung mit einer mit einem Antriebsorgan zur Drehung um eine Drehachse zu koppelnden Primärseite, einer gegen die Wirkung einer Dämpferfederanordnung bezüglich der Primärseite um die Drehachse drehbaren Sekundärseite und einer Reibeinrichtung zur Erzeugung einer Reibungskopplung zwischen Primärseite und Sekundärseite, eine Reibungskupplung an der Sekundärseite der Schwingungsdämpfungsanordnung sowie ein Betätigungssystem zur Erzeugung einer Betätigungskraft zur Betätigung der Reibungskupplung zwischen einem Einrückzustand und einem Ausrückzustand und zur Betätigung der Reibeinrichtung.

Derartige Drehmomentübertragungssysteme weisen das grundsätzliche Problem auf, dass im Bereich der Schwingungsdämpfungsanordnung durch Schwingungsanregung bei Durchlaufen eines Resonanzfrequenzbereichs sehr hohe Winkelbeschleunigungen bzw. Relativdrehungen zwischen Primärseite und Sekundärseite auftreten können, welche Auslenkungen dann zu Geräuschen oder gar Beschädigungen verschiedener Systemkomponenten führen können. Die Resonanzfrequenz eines derartigen Systems liegt im Allgemeinen unter der Leerlaufdrehzahl, so dass insbesondere der Zustand des Startens eines Antriebsaggregats bzw. des Abstellens kritisch ist, da dann jeweils dieser Bereich der Resonanz durchlaufen wird. Das Vorsehen einer permanent wirkenden Reibeinrichtung hat den Nachteil, dass sie so ausgelegt sein muss, dass im normalen Betrieb noch eine ausreichende Schwingungsentkopplung zwischen Primärseite und Sekundärseite vorhanden ist, gleichwohl jedoch beim Durchlaufen der Resonanz durch ausreichend starke Reibungskopplung das Auftreten von Schwingungsüberhöhungen vermieden werden kann. Dies bedingt, dass für jeden Betriebszustand ein Kompromiss in der Funktionalität eingegangen werden muss.

Aus der DE 195 19 363 D2 ist ein Drehmomentübertragungssystem bekannt, bei dem eine zwischen der Primärseite und der Sekundärseite zur Wirksamkeit bringbare Reibeinrichtung bei Erzeugung einer Betätigungskraft in einen Zustand bringbar ist, in welchem eine Reibungskopplung zwischen der Primärseite und der Sekundärseite erfolgt. Die Auslegung ist dabei derart, dass, solange durch das Betätigungssystem die Druckplattenbaugruppe bzw. die dadurch bereitgestellte Reibungskupplung in einem normalen Arbeitsbereich zwischen einem vollkommen eingekuppelten und einem vollkommen ausgekuppelten Zustand verstellt wird, die Reibeinrichtung selbst nicht wirksam wird. Durch Erzeugung einer übermäßigen Betätigungskraft, also einer Betätigungskraft, die das zum vollständigen Einrücken der Reibungskupplung erforderliche Kraftniveau übersteigt, wird auch die Reibeinrichtung beeinflusst, so dass diese die Reibungskopplung zwischen Primärseite und Sekundärseite herstellt und auf diese Art und Weise das Auftreten von Schwingungsresonanzen insbesondere beim Durchlaufen der Resonanzfrequenz der Schwingungsdämpfungsanordnung unterdrückt. Die Notwendigkeit, eine derart große Betätigungskraft zu erzeugen, dass die an sich für das vollkommene Ausrücken der Reibungskupplung erforderliche Betätigungskraft überstiegen wird bzw. auch ein entsprechender Verstellweg im Betätigungssystem überstiegen wird, erfordert eine entsprechende Auslegung der verschiedenen Baugruppen hinsichtlich ihrer Bewegungsmöglichkeit, so dass ein größerer Gesamtbauraum zur Verfügung gestellt werden muss.

Die DE 100 56 733 A1 zeigt ein Drehmomentübertragungssystem, bei welchem eine Reibungskopplung zwischen Primärseite und Sekundärseite dadurch erzeugt werden kann, dass im Einrückzustand einer Reibungskupplung bzw. einer Druckplattenbaugruppe eine derartige das normale Einrück-Kraftniveau übersteigende Betätigungskraft erzeugt wird, dass durch elastische Verformung verschiedener Baugruppen, insbesondere der Sekundärseite der Schwingungsdämpfungsanordnung, die Sekundärseite und die Primärseite in gegenseitigen Reibkontakt treten. Auch hier ist also eine derartige Betätigung bzw. Betätigungskrafterzeugung erforderlich, dass ein normales Kraftniveau und ein normales Verstellwegniveau, wie es an sich im Bereich der Druckplattenbaugruppe erforderlich wäre, überschritten wird und entsprechende Belastungen auftreten und selbstverständlich auch entsprechender Stellweg bereitgehalten werden muss.

Es ist die Aufgabe der vorliegenden Erfindung, ein gattungsgemäßes Drehmomentübertragungssystem derart weiterzubilden, dass es bei verringertem Bauraumbedarf die Funktion zum optionalen Erzeugen einer Reibungskopplung zwischen Primärseite und Sekundärseite erfüllen kann.

Erfindungsgemäß wird diese Aufgabe durch die kennzeichnenden Merkmale gelöst.

Wesentlich ist bei dem erfindungsgemäßen Drehmomentübertragungssystem, dass die Reibeinrichtung zwischen dem Aktivzustand und dem Deaktivzustand umschaltbar ist. Dies ermöglicht es, die Wechselwirkung der Reibeinrichtung mit dem Betätigungssystem so zu gestalten, dass auch bei normaler Betätigungskrafterzeugung, d.h. in einem Wirkungsbereich des Betätigungssystems, in dem dieses beim Verstellen der Reibungskupplung zwischen einem vollkommen ausgerückten und einem vollkommen eingerückten Zustand arbeitet, auch die Reibeinrichtung beeinflusst bzw. betätigt werden kann. Dies wäre im normalen Fahrbetrieb nachteilhaft, da dann bei Betätigungskrafterzeugung die Reibeinrichtung zur Erzeugung der Reibungskopplung aktiv wäre, was im Allgemeinen nicht gewünscht wird. Erfindungsgemäß wird dies jedoch dadurch kompensiert, dass die Reibeinrichtung selbst wahlweise aktiviert bzw. deaktiviert werden kann, so dass selbst dann, wenn im normalen Fahrbetrieb, in dem die Reibungskopplung zwischen Primärseite und Sekundärseite nicht gewünscht ist, durch Deaktivieren der Reibeinrichtung eine Betätigungskrafterzeugung nicht dazu führt, dass die Reibeinrichtung die Reibungskopplung zwischen Primärseite und Sekundärseite herstellt. Dies hat zur Folge, dass das Betätigungssystem hinsichtlich seines Hubs und der zu erzeugenden Kräfte im Wesentlichen so ausgestaltet werden kann, wie es für eine herkömmliche Reibungskupplung bzw. Druckplattenbaugruppe auszulegen wäre. Es muss kein zusätzlicher, über das normale Ausmaß der Kupplungsbetätigung hinausgehender Stellweg zur Betätigung der Reibeinrichtung bereitgestellt werden.

Um bei der erfindungsgemäßen Anordnung in einfacher Art und Weise das Umschalten der Reibeinrichtung zwischen den beiden Zuständen erlangen zu können, wird vorgeschlagen, dass die Reibeinrichtung eine mit der Primärseite gekoppelte erste Reibbaugruppe und eine mit der Sekundärseite gekoppelte zweite Reibbaugruppe aufweist, wobei im Aktivzustand der Reibeinrichtung durch Betätigungskraftbeaufschlagung vermittels des Betätigungssystems eine Reibwechselwirkung zwischen der ersten Reibbaugruppe und der zweiten Reibbaugruppe erzeugbar ist, und dass wenigstens eine Reibbaugruppe von erster Reibbaugruppe und zweiter Reibbaugruppe wenigstens ein Baugruppenelement umfasst, das zum Umschalten der Reibeinrichtung zwischen dem Aktivzustand und dem Deaktivzustand verstellbar ist.

Der konstruktive bzw. steuerungstechnische Aufwand zum Erlangen des Umstellverhaltens des wenigstens einen Baugruppenelements zwischen seinen beiden Stellzuständen kann dadurch gering gehalten werden, dass das wenigstens eine Baugruppenelement in einen Stellzustand vorgespannt ist und durch Stellkrafteinwirkung in den anderen Stellzustand verstellbar ist. Auf diese Art und Weise muss nur durch Beaufschlagung des wenigstens einen Baugruppenelements in einer Richtung, nämlich zur Erlangung des anderen Stellzustands, eine betriebszustandsabhängig aufzubringende Kraft bereitgestellt werden. Dieser Aspekt zur zur Erlangung der verschiedenen Stellzustände kann dadurch unterstützt werden, dass die Stellkrafteinwirkung durch Fliehkrafteinwirkung erfolgt.

Wenn bei der erfindungsgemäßen Anordnung grundsätzlich vorgesehen ist, dass der eine Stellzustand der Aktivzustand ist, ist definitiv dafür gesorgt, dass grundsätzlich die Reibeinrichtung in einem Zustand ist, in welchem sie zur Erzeugung eines Reibmoments bzw. einer Reibkopplung zwischen Primärseite und Sekundärseite bereit ist.

Eine stabile, gleichwohl jedoch die Verstellung des wenigstens einen Baugruppenelements zulassende Halterung desselben kann dadurch erlangt werden, dass das wenigstens eine Baugruppenelement an der mit der einen Reibbaugruppe gekoppelten Seite von Primärseite und Sekundärseite zwischen dem Aktivzustand und dem Deaktivzustand verschwenkbar getragen ist.

Da, wie eingangs bereits erwähnt, vor allem das Durchlaufen des Resonanzbereichs der Schwingungsdämpfungsanordnung kritisch ist, welcher Resonanzbereich im Allgemeinen unter der Leerlaufdrehzahl eines Antriebssystems liegt, kann gemäß einem weiteren vorteilhaften Aspekt der vorliegenden Erfindung vorgesehen sein, dass Vorspannung und Stellkrafteinwirkung derart aufeinander abgestimmt sind, dass bei Erreichen einer vorbestimmten Drehzahl oder eines vorbestimmten Drehzahlbereichs ein Verstellen des wenigstens einen Baugruppenelements zwischen dem ersten Stellzustand und dem zweiten Stellzustand erfolgen kann, wobei dann vorteilhafterweise weiter vorgesehen sein kann, dass bei Erhöhen der Drehzahl die Vorspannung bis zum Erreichen der vorbestimmten Drehzahl oder des vorbestimmten Drehzahlbereichs die Fliehkrafteinwirkung wenigstens bereichsweise kompensiert. Auf diese Art und Weise wird sichergestellt, dass im Bereich geringer Drehzahl, also beim Durchlaufen der Resonanz und beispielsweise bis zum Erreichen oder Überschreiben der Leerlaufdrehzahl die Reibeinrichtung im Aktivzustand ist und dann im normalen Betrieb deaktiviert ist.

Ein wesentlicher Aspekt der vorliegenden Erfindung kann weiterhin sein, dass bei Erzeugung einer Betätigungskraft durch das Betätigungssystem zum Verstellen der Reibungskupplung zwischen dem Einrückzustand und dem Ausrückzustand ein erster Teil der Betätigungskraft als Einrückkraft wirksam ist und ein zweiter Teil der Betätigungskraft als Reibeinrichtungsbetätigungskraft wirksam ist. Dies bedeutet also, dass die Beaufschlagung der Reibeinrichtung bei dem erfindungsgemäßen System parallel zur Durchführung von Ein- bzw. Ausrückvorgängen erfolgt, so dass kein zusätzlicher über dem normalen Verstellweg einer Reibungskupplung hinausgehender Stellweg im Betätigungssystem erforderlich ist, um die Beaufschlagungswirkung der Reibeinrichtung erlangen zu können. Dies vereinfacht den Aufbau sowohl im Bereich des Betätigungssystems als auch im Bereich der Reibeinrichtung bzw. der Schwingungsdämpfungsanordnung und führt zu einer geringeren Gesamtbaugröße eines erfindungsgemäßen Drehmomentübertragungssystems.

Bei dem erfindungsgemäßen Drehmomentübertragungssystem kann insbesondere die Reibeinrichtung derart ausgestaltet sein, dass die andere Reibbaugruppe ein ringartiges Reibelement umfasst und dass das wenigstens eine Baugruppenelement durch das Betätigungssystem bei Betätigungskrafterzeugung in Reibwechselwirkung mit dem ringartigen Reibelement bringbar ist. Um dabei eine in Umfangsrichtung möglichst gleichmäßige Wechselwirkung bzw. Beaufschlagung erlangen zu können, wird weiter vorgeschlagen, dass die eine Baugruppe eine Mehrzahl von in Umfangsrichtung aufeinander folgend angeordneten Baugruppenelementen aufweist.

Eine Verstärkung der Reibwirkung kann weiterhin dadurch erlangt werden, dass die eine Reibbaugruppe an einer ersten Seite des ringartigen Reibelements das wenigstens eine Baugruppenelement aufweist und an einer zweiten Seite des ringartigen Reibelements wenigstens ein Widerlagerreibelement aufweist. Bei einer alternativen Ausgestaltungsvariante ist es möglich, dass das ringartige Reibelement der anderen Reibbaugruppe an einer ersten Seite des wenigstens einen Baugruppenelements angeordnet ist und dass die andere Reibbaugruppe an einer zweiten Seite des wenigstens einen Baugruppenelements wenigstens ein Widerlagerreibelement aufweist.

Um bei Beaufschlagung der Reibeinrichtung durch das Betätigungssystem definierte Kraftverhältnisse bereitstellen zu können, auch dann, wenn über die Betriebslebensdauer hinweg im Bereich der Reibungskupplung sich Änderungen ergeben, kann vorgesehen sein, dass die Reibeinrichtung im Abstützweg der Betätigungskraft ein elastisches Element umfasst. Eine derartige Anordnung hat zur Folge, dass die im Bereich der Reibeinrichtung erzeugte Anpresskraft im Wesentlichen bestimmt ist durch die Elastizität des elastischen Elements, welches beispielsweise als Tellerfeder o.dgl. ausgeführt sein kann, so dass Änderungen in der Betätigungskraftcharakteristik des Beaufschlagungssystems sich hier im Wesentlichen nicht auswirken.

Weiterhin kann gemäß der vorliegenden Erfindung vorgesehen sein, dass die Reibungskupplung eine Doppelkupplung ist mit einem ersten Kupplungsbereich und einem zweiten Kupplungsbereich und dass die Reibeinrichtung einen ersten Reibeinrichtungsbereich aufweist, der bei Betätigungskrafterzeugung durch das Betätigungssystem für den ersten Kupplungsbereich die Reibungskopplung zwischen Primärseite und Sekundärseite erzeugen kann oder/und einen zweiten Reibeinrichtungsbereich umfasst, der bei Betätigungskrafterzeugung durch das Betätigungssystem für den zweiten Kupplungsbereich die Reibungskopplung zwischen Primärseite und Sekundärseite erzeugen kann.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht eines erfindungsgemäßen Drehmomentübertragungssystems;
- Fig. 2: eine Prinzipdarstellung einer bei dem Drehmomentübertragungssystem der Fig. 1 eingesetzten Reibeinrichtung zum Erklären der wesentlichen Prinzipien der Erfindung;
- Fig. 3: eine Detailansicht des Systems der Fig. 1 in einem Aktivzustand der Reibeinrichtung;
- Fig. 4: eine der Fig. 3 entsprechende Ansicht in einem Deaktivzustand der Reibeinrichtung,
- Fig. 5: eine Prinzip-Axialansicht der bei der Ausgestaltungsform gemäß den Figuren 1 bis 4 eingesetzten Reibeinrichtung;
- Fig. 6: eine Schnittansicht eines bei der Reibeinrichtung eingesetzten schwenkbaren Reibbauteils;
- Fig. 7: eine Axialansicht eines bei der Reibeinrichtung eingesetzten Reibrings;
- Fig. 8: eine Schnittansicht des Reibrings der Fig. 7;
- Fig. 9: eine Abwandlung des in Fig. 1 gezeigten Systems;
- Fig. 10: eine weitere erfindungsgemäße Ausgestaltungsform eines Drehmomentübertragungssystems;
- Fig. 11: eine Detailansicht des Systems der Fig. 10 in einem Aktivzustand der Reibeinrichtung;
- Fig. 12: eine der Fig. 11 entsprechende Ansicht in einem Deaktivzustand der Reibeinrichtung;
- Fig. 13: ein weiteres erfindungsgemäß ausgestaltetes Drehmomentübertragungssystem;
- Fig. 14: eine Draufsicht auf einen Kraftspeicher des in Fig. 13 gezeigten Systems;
- Fig. 15: eine Abwandlung des in Fig. 14 gezeigten Kraftspeichers;
- Fig. 16: eine Teil-Radialansicht des in Fig. 15 gezeigten Kraftspeichers in Blickrichtung XVI in Fig. 15;
- Fig. 17: eine Teil-Schnittansicht des in Fig. 15 gezeigten Kraftspeichers geschnitten längs einer Linie XVII-XVII in Fig. 15;
- Fig. 18: eine Detailansicht eines bei der Ausgestaltungsform der Fig. 13 eingesetzten schwenkbaren Reibbauteils;
- Fig. 19: ein Diagramm, das den Zusammenhang der bei einem Betätigungssystem bereitzustellenden Anpresskraft in Abhängigkeit von dem Schließweg zeigt.

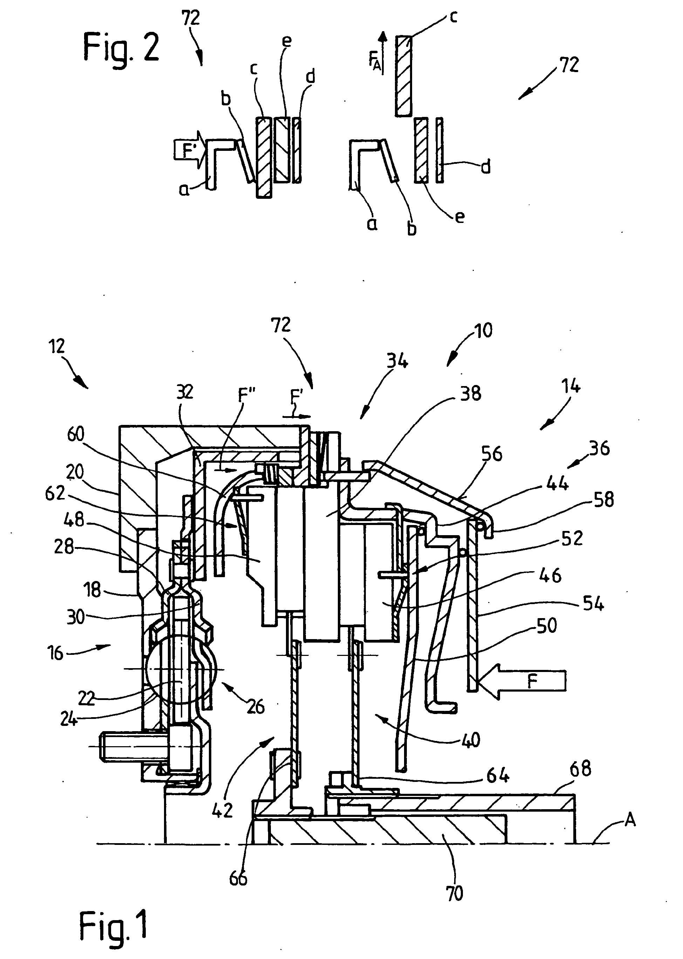

In Fig. 1 ist ein erfindungsgemäßes Drehmomentübertragungssystem 10 gezeigt. Dieses umfasst zwei wesentliche Systembereiche, nämlich zum einen einen in Form eines Zweimassenschwungrads aufgebauten Torsionsschwingungsdämpfer 12 und zum anderen eine hier in Form einer Doppelkupplung 36 aufgebaute Reibungskupplung 14.

Der Torsionsschwingungsdämpfer 12 wiederum weist eine mit einer nicht dargestellten Antriebswelle zur gemeinsamen Drehung fest zu verbindende Primärseite 16 auf, die im dargestellten Beispiel ein Scheibenteil 18 mit im radial äußeren Bereich desselben getragener Primärschwungmasse 20 sowie ein mit diesen beiden Teilen drehfest gekoppeltes Zentralscheibenelement 22 aufweist. Über eine beispielsweise mehrere Schraubendruckfedem umfassende Dämpferfederanordnung 24 ist mit dieser Primärseite 16 eine Sekundärseite 26 zur Drehmomentübertragung gekoppelt. Die Sekundärseite 26 umfasst im dargestellten Beispiel zwei Deckscheibenelemente 28, 30, die, ebenso wie das Zentralscheibenelement 22, Abstützbereiche für die Dämpferfedem 24 bereitstellen. Im radial äußeren Bereich sind diese Deckscheibenelemente 28, 30 durch Vernietung oder dergleichen fest verbunden und sind weiterhin mit einem Verbindungselement 32 fest verbunden. Dieses Verbindungselement 32 wiederum ist mit einem im Folgenden noch detaillierter erläuterten Eingangsbereich 34 der Reibungskupplung 14 fest verbunden. Über diesen Torsionsschwingungsdämpfer 12 wird also das an einer Antriebswelle erzeugte Drehmoment in Richtung zum Eingangsbereich 34 der Reibungskupplung 14 übertragen.

Wie bereits erwähnt, ist die Reibungskupplung 14 hier als Doppelkupplung 36 ausgebildet und umfasst als Eingangsbereich 34 im Wesentlichen eine Zwischenplatte 38, die ein Widerlager für die beiden Kupplungsbereiche 40, 42 der Doppelkupplung 36 bildet. Mit dieser Zwischenplatte 38 ist in nicht erkennbarer Weise das Verbindungselement 32 oder ggf. mehrere in Umfangsrichtung um die Drehachse A aufeinander folgend angeordnete Verbindungselemente 32 durch Verschraubung oder dergleichen fest verbunden. Der Eingangsbereich 34 der Doppelkupplung 36 umfasst weiterhin ein mit der Zwischenplatte 38 fest verbundenes Gehäuse 44 sowie in Zuordnung zu den beiden Kupplungsbereichen 40, 42 jeweils eine Anpressplatte 46, 48. Die Anpressplatte 46 des Kupplungsbereichs 40 wird zur Erzeugung eines Einrückzustands dieses Kupplungsbereichs 40 von einer Kraftbeaufschlagungsanordnung 50 beaufschlagt, die im Falle eines Kupplungsbereichs 40 des Normal-Geschlossen-Typs als Membranfeder oder dergleichen ausgebildet sein kann, im Falle des Aufbaus des Kupplungsbereichs 40 nach dem Normal-Offen-Prinzip eine Mehrzahl von im Wesentlichen keinen eigenen Kraftbeitrag liefernden Hebelelementen umfassen kann. Im dargestellten Beispiel wird die Einrückkraft von der Kraftbeaufschlagungsanordnung, die sich in ihrem radial äußeren Bereich am Gehäuse 44 abstützt, über eine Verschleißnachstellvorrichtung 52 auf die Anpressplatte 46 geleitet.

Dem Kupplungsbereich 42 ist ebenfalls eine Kraftbeaufschlagungsanordnung 54 zugeordnet, die beim Aufbau nach dem Normal-Geschlossen-Prinzip als Kraftspeicher ausgebildet sein kann, bei dem im Falle von Doppelkupplungen im Allgemeinen aber bevorzugten Aufbau nach dem Normal-Offen-Prinzip wieder eine Mehrzahl von Hebelelementen umfassen kann. Die Kraftbeaufschlagungsanordnung 54 stützt sich an der Außenseite des Gehäuses 44 ab und überträgt die Einrückkraft über eine Kraftübertragungsanordnung 56, welche die Zwischenplatte 38 überbrückt, zur Anpressplatte 48 des Kupplungsbereichs 42. Diese Kraftübertragungsanordnung 56 umfasst zwei im Wesentlichen topfartig ausgestaltete Bauteile 58, 60. Dabei wird das Bauteil 58 von der Kraftbeaufschlagungsanordnung 54 beaufschlagt, während das Bauteil 60 über eine Verschleißnachstellvorrichtung 62 die Anpressplatte 48 beaufschlagt und mit in Umfangsrichtung verteilt liegenden Stegabschnitten die Zwischenplatte 38 überbrückt. Im Bereich der freien Enden dieser Stegabschnitte sind dann die Bauteile 58, 60 beispielsweise durch Verschweißung fest verbunden.

Bei beiden Kupplungsbereichen 40, 42 sind weiterhin die grundsätzlich dem Eingangsbereich 34 zuzuordnenden Anpressplatten 46, 48 mit der Zwischenplatte 38 oder/und dem Gehäuse 44 zur gemeinsamen Drehung gekoppelt, beispielsweise über Tangentialblattfedem oder dergleichen, die auch eine Lüftkraft für diese Anpressplatten 46, 48 bereitstellen können. Ferner ist in Zuordnung zu jedem Kupplungsbereich eine Kupplungsscheibe 64, 66 vorgesehen. Jede dieser Kupplungsscheiben 64, 66 bildet im Wesentlichen dann den Ausgangsbereich des jeweiligen Kupplungsbereichs 40, 42 und ist mit einer von zwei koaxial ineinander liegenden Abtriebswellen 68, 70 drehfest verbunden oder verbindbar. Je nachdem, welche der Anpressplatten bei Erzeugung einer Einrückkraft die zugehörige Kupplungsscheibe 64 oder 66 gegen die Zwischenplatte 38 presst, ist einer der Kupplungsbereiche 40, 42 in einem Drehmomentübertragungszustand, während der andere der Kupplungsbereiche dann kein Drehmoment überträgt.

Die Betätigungskräfte für die beiden Kupplungsbereiche 40, 42 bzw. die beiden Kraftbeaufschlagungsanordnungen 50, 54 derselben können im Falle von Kupplungsbereichen des Normal-Offen-Typs durch herkömmliche, bekannte Betätigungssysteme mit koaxial gestaffelten Betätigungszylindem, Betätigungsgabeln oder dergleichen erzeugt werden. Ebenso wie der vorangehend nur prinzipiell und anhand eines Beispiels beschriebene Aufbau eines Drehmomentübertragungssystems 10 können auch bei derartigen Betätigungssystemen vielfältige Variationen vorgesehen sein, die dem Fachmann geläufig sind. Von Bedeutung für die vorliegende Erfindung ist jedoch, dass, wie in Fig. 1 symbolhaft angedeutet, beispielsweise für den Kupplungsbereich 42 durch das zugeordnete Betätigungssystem eine Betätigungskraft F bereitgestellt wird, die über die zugehörige Kraftbeaufschlagungsanordnung 54 und die Kraftübertragungsanordnung 56 dann zumindest zum Teil in die Anpressplatte 48 eingeleitet werden kann, wobei grundsätzlich die Kraftbeaufschlagunganordnungen auch dem Betätigungssystem zugerechnet werden könnten.

Ein weiterer wesentlicher Bestandteil des erfindungsgemäßen Drehmomentübertragungssystems 10 ist eine allgemein mit 72 bezeichnete Reibeinrichtung. Diese Reibeinrichtung 72 dient dazu, einer Relativdrehung zwischen der Primärseite 16 und der Sekundärseite 26 des Torsionsschwingungsdämpfers 12 entgegenzuwirken, d.h. bei Relativdrehung Energie in Form von Reibenergie bzw. Wärmeenergie zu dissipieren, bzw. bei entsprechend großer Reibkraft die Relativdrehung vollständig zu unterbinden und somit Primärseite 16 und Sekundärseite 26 zur gemeinsamen Drehung starr zu koppeln. Es ist bekannt, dass derartige Torsionsschwingungsdämpfer einen Resonanzbereich aufweisen, der - bezogen auf die Drehzahl des Drehmomentübertragungssystems - in einem Bereich liegt, der so gewählt ist, dass er im normalen Fahrbetrieb nicht durchlaufen wird. Es können somit im Fahrbetrieb durch Resonanzanregung erzeugte übermäßige Drehschwingungen vermieden werden. Dazu wird der Torsionsschwingungsdämpfer 12 im Allgemeinen so ausgelegt, dass diese Resonanzfrequenz bzw. Resonanzdrehzahl unter der Leerlaufdrehzahl des Antriebssystems, in welches ein derartiges Drehmomentübertragungssystem integriert ist, liegt. Somit besteht aber beim Starten bzw. beim Abstellen und dem dabei auftretenden Durchlaufen der Resonanz die Gefahr, dass übermäßige Drehschwingungen erzeugt werden. Der Erzeugung dieser übermäßigen Drehschwingungen soll die Reibeinrichtung 72 entgegenwirken, indem sie eine entsprechend starke Kopplung zwischen Primärseite 16 und Sekundärseite 26 generiert. Da eine derartige starke Kopplung zwischen Primärseite 16 und Sekundärseite 26 das Schwingungsdämpfungsvermögen des Torsionsschwingungsdämpfers 12 im normalen Fahrbetrieb jedoch erheblich beeinträchtigen würde, wird gemäß der vorliegenden Erfindung dafür gesorgt, dass die Reibeinrichtung 72 grundsätzlich nur dann wirksam ist, wenn sie benötigt wird, ansonsten jedoch deaktiviert ist. Dies wird zunächst mit Bezug auf die Prinzipdarstellung der Fig. 2 in prinzipieller Hinsicht erläutert.

Dabei zeigt die Fig. 2 in ihrer linken Hälfte einen Aktivzustand der Reibeinrichtung 72, also einen Zustand, in welchem diese zur Erzeugung einer Reibkopplung zwischen Primärseite 16 und Sekundärseite 26 in der Lage ist, während die rechte Seite einen Deaktivzustand zeigt, also einen Zustand, in welchem eine derartige Reibwirkung praktisch nicht erzeugbar ist. Die in Fig. 2 prinzipiell dargestellte Reibeinrichtung 72 umfasst ein Bauteil a, das mit einer Kraft F' beaufschlagt wird. Diese Kraft F' ist ein Teil der von dem bereits angesprochenen Betätigungssystem bereitgestellten Betätigungskraft, also im vorliegenden Falle Einrückkraft F, der über die Kraftübertragungsanordnung 56 in die Reibeinrichtung 72 eingeleitet wird. Ein weiterer in Fig. 1 erkennbarer Teil F" dieser Einrückkraft F wird über die Kraftübertragungsanordnung 56 in die Anpressplatte 48 eingeleitet. Somit wird die Gesamt-Betätigungskraft bzw- Gesamt-Einrückkraft F aufgeteilt in die beiden Kraftanteile F' und F" (jeweils unter Berücksichtigung der Hebelübertragungsverhältnisse), und der Kraftanteil F' wird dazu genutzt, bei im Aktivzustand gehaltener Reibeinrichtung 72 eine Reibkraft zu erzeugen.

Von dem in Fig. 2 erkennbaren Bauteil a wird über ein eine Elastizität bereitstellendes Bauteil b, also beispielsweise eine Tellerfeder, eine Wellfeder oder dergleichen, die Kraft F' in eine Baugruppe c eingeleitet. Zusammen mit dieser Baugruppe c bildet eine Baugruppe d eine Reibbaugruppe c, d, die beispielsweise mit der Sekundärseite 26 drehfest gekoppelt sein kann. Eine zwischen den Baugruppen c und d liegende Baugruppe e, beispielsweise ausgestaltet als Reibring, kann dann eine weitere Reibbaugruppe bilden, die mit der Primärseite 16 fest gekoppelt ist. Bei Einleitung der Kraft bzw. des Kraftteils F' werden die Reibbaugruppen c, d und e in Reibwechselwirkung gebracht, so dass die vorangehend angesprochene Verkopplungswirkung zwischen Primärseite 16 und Sekundärseite 26 generiert wird. Dies geschieht jedes mal dann, wenn in dem in Fig. 2 links erkennbaren Zustand der Reibeinrichtung 72 eine Betätigungskraft bzw. Einrückkraft F für den Kupplungsbereich 42 erzeugt wird. Es kann also beispielsweise dafür gesorgt werden, dass beim Anlassen eines Antriebsaggregats, im Allgemeinen einer Brennkraftmaschine, die Kraft F durch entsprechende Aktivierung des Betätigungssystems erzeugt wird, wobei selbstverständlich darauf zu achten ist, dass dann in einer im Antriebsstrang folgenden Getriebeanordnung in Zuordnung zum Kupplungsbereich 42 kein Gang eingelegt ist. Beim Anlassen durchläuft dann mit aktivierter Reibeinrichtung 72 das Drehmomentübertragungssystem 10 den Resonanzbereich des Torsionsschwingungsdämpfers 12, wobei jedoch auf Grund des Wirksamseins der Reibeinrichtung 72 die Primärseite 16 und die Sekundärseite 26 so stark miteinander verkoppelt sind, dass Schwingungsüberhöhungen nicht auftreten können.

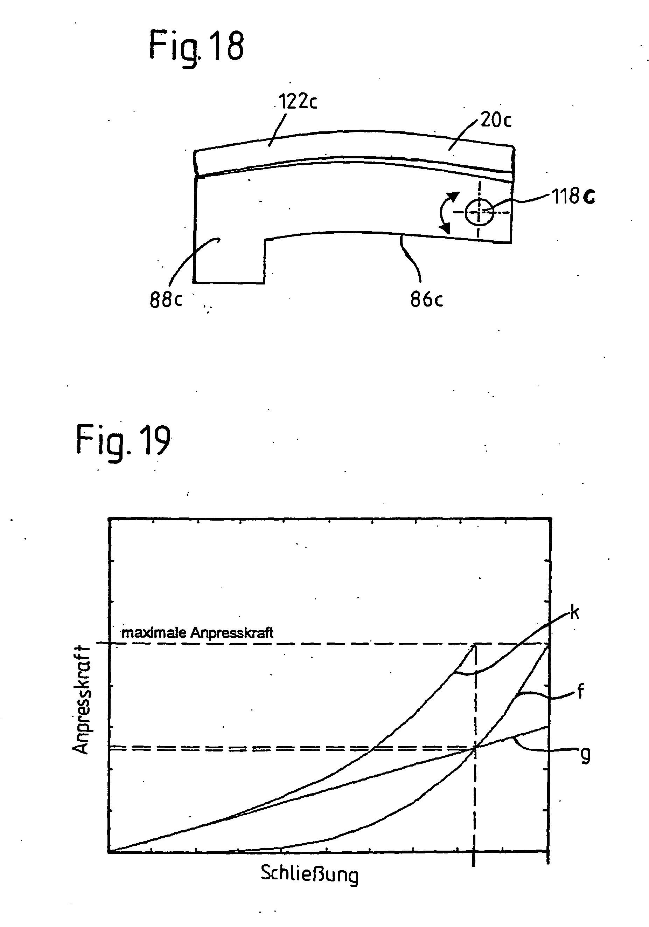

Dass in diesem Zustand das Verwenden eines Teils der Einrückkraft F, nämlich des Anteils F', zum Erzeugen einer Reibwechselwirkung sich nicht nachteilhaft auswirkt auf die Kupplungscharakteristik des Kupplungsbereichs 42, kann dem Diagramm der Fig. 19 entnommen werden. Man erkennt in der Fig. 19 aufgetragen über dem Schließweg bzw. dem Betätigungsweg des Betätigungssystems die von diesem allgemein aufzubringende Anpresskraft. Hier stellt die Kurve f diejenige Kraft dar, welche bei deaktivierter bzw. nicht vorhandener Reibeinrichtung 72 zu erzeugen wäre. Der progressive Verlauf ergibt sich im Allgemeinen durch die mit zunehmenden Schließen des Kupplungsbereichs 42 entstehenden Gegenkräfte, im Wesentlichen bereitgestellt durch eine Belagfederung der zugeordneten Kupplungsscheibe 66. Die maximal erzeugbare Anpresskraft definiert im Prinzip dann am rechten Ende der Schließweg-Achse auch denjenigen Zustand Max, der als maximal eingerückter Zustand betrachtet werden kann. Eine weitere Bewegung in Richtung Schließen ist auf Grund einer nicht mehr erhöhbaren Anpresskraft nicht möglich.

In Fig. 19 repräsentiert die Kurve bzw. Gerade g den über dem Schließweg auftretenden Verlauf der in der Reibeinrichtung 72 erzeugten Gegenkraft, im Wesentlichen bereitgestellt oder definiert durch die Elastizität des Bauteils b in Fig. 2. Prinzipiell entspricht daher die Kraft g in Fig. 19 der in Fig. 2 erkennbaren und in die Reibeinrichtung 72 eingeleiteten bzw. in Abhängigkeit vom Schließweg einzuleitenden Kraft F'. Dem Betätigungssystem, das die Kraft F in die Doppelkupplung 36 bzw. den Kupplungsbereich 42 einleitet, wirken also grundsätzlich die beiden Kräfte f und g entgegen, so dass zum Verstellen des Kupplungsbereichs 42 in Richtung Schließen die aus der Summe der Kräfte f und g sich ergebende Gesamtkraft k aufgebracht werden muss. Daraus folgt, dass die maximal erzeugbare Anpresskraft schon früher erreicht wird, also in einem Zustand erreicht wird, in welchem der maximal durchlaufbare bzw. zu durchlaufende Schließweg noch nicht durchlaufen ist. Dies hat zur Folge, dass die in den Kupplungsbereich 42 eingeleitete Schließkraft F" bei dann maximal geschlossenem Kupplungsbereich 42 reduziert ist im Vergleich zu einem Zustand, in welchem kein Kraftanteil in die Reibeinrichtung 72 fließt. In Folge dessen wäre auch das im Kupplungsbereich 42 maximal übertragbare Drehmoment entsprechend reduziert, was jedoch nicht kritisch ist, da in dem Zustand, in welchem in die Reibeinrichtung 72 ein Kraftanteil, nämlich der Kraftanteil F' eingeleitet werden soll, in Zuordnung zum Kupplungsbereich 42 kein Gang eingelegt ist und somit über diesen Kupplungsbereich 42 ohnehin kein Drehmoment zu übertragen ist.

Um dafür zu sorgen, dass dann, wenn über die Doppelkupplung 36 bzw. den Kupplungsbereich 42 ein Drehmoment zu übertragen ist, um ein Fahrzeug anzutreiben bzw. zu beschleunigen, wieder eine ausreichende Betätigungskraft bzw. Einrückkraft in den Kupplungsbereich 42 eingeleitet wird, wird gemäß den Prinzipien der vorliegenden Erfindung dafür gesorgt, dass die Reibeinrichtung 72 in einen in der Fig. 2 rechts erkennbaren Deaktivzustand gebracht werden kann. In dem in Fig. 2 dargestellten Beispiel wird dies dadurch erlangt, dass auf die Baugruppe c eine Kraft F_{A} ausgeübt wird, um diese aus dem Kraftfluss der Reibeinrichtung 72 herauszunehmen, so dass in der Reibeinrichtung 72 im Prinzip keine Gegenkraft erzeugt wird und insofern auch kein Anteil der Betätigungskraft bzw. Einrückkraft F in die Reibeinrichtung 72 eingeleitet wird. Man erkennt dies in der Fig. 2 rechts dadurch, dass selbst dann, wenn das Bauten a belastet wird, die Kraftkopplung zwischen dem Bauteil b, also dem elastischen Bauteil, und der Baugruppe e unterbrochen ist und insofern keine Gegenkraft aufgebaut wird. Die gesamte über die Kraftbeaufschlagungsanordnung 54 in die Kraftübertragungsanordnung 56 eingeleitete Kraft kann dann direkt in die Anpressplatte 48 eingeleitet werden.

Um den Übergang zwischen den in Fig. 2 erkennbaren Zuständen, also dem Aktivzustand (Fig. 2 links) und dem Deaktivzustand (Fig. 2 rechts) erreichen zu können, ist es erforderlich, nach dem Durchlaufen des kritischen Zustands, also des Resonanzbereichs unterhalb der Leerlaufdrehzahl, den Kraftschluss in der Reibeinrichtung 72 zumindest kurzzeitig aufzuheben, um bei vergleichsweise geringer Kraft F_{A} das Herausnehmen der Baugruppe c aus dem Wirkbereich der Reibeinrichtung 72 zu ermöglichen. Dies kann dadurch erlangt werden, dass dann, wenn der kritische Bereich durchlaufen ist und insofern die vergleichsweise starke Reibkopplung der Reibeinrichtung 72 nicht mehr erforderlich ist, das Erzeugen der Betätigungskraft für den zweiten Kupplungsbereich 42 zumindest kurzzeitig aufgehoben wird, so dass auch der in die Reibeinrichtung 72 eingeleitete Kraftanteil F' zurückgeht bzw. nicht mehr vorhanden ist. Bei dann nicht mehr vorhandener oder stark geminderter Reibwechselwirkung zwischen den Bauteilen bzw. Baugruppen c, d, e ist dann die zum Bewegen der Baugruppe c in den in Fig. 2 rechts erkennbaren Zustand, also zum Verstellen der Reibeinrichtung 72 in den Deaktivzustand, erforderliche Kraft vergleichsweise gering.

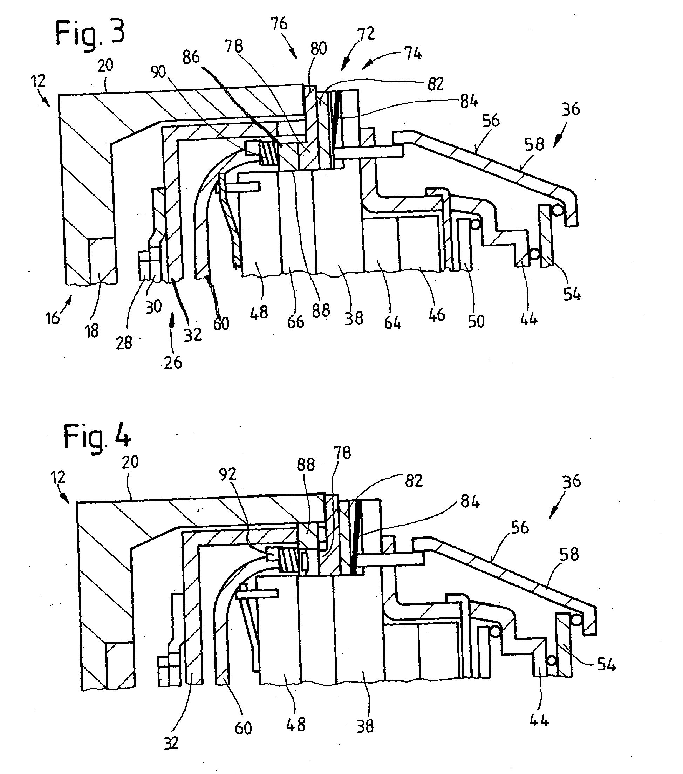

Mit Bezug auf die Figuren 1 und 3 bis 8 wird nachfolgend ein konstruktiver Aufbau beschrieben, der gemäß dem vorangehend detailliert erläuterten und in Fig. 2 prinzipiell dargestellten Funktionsprinzip arbeitet. Es wird hierzu zunächst Bezug auf die Fig. 3 genommen, welche den oberen Teil des Drehmomentübertragungssystems 10 der Fig. 1 vergrößert darstellt.

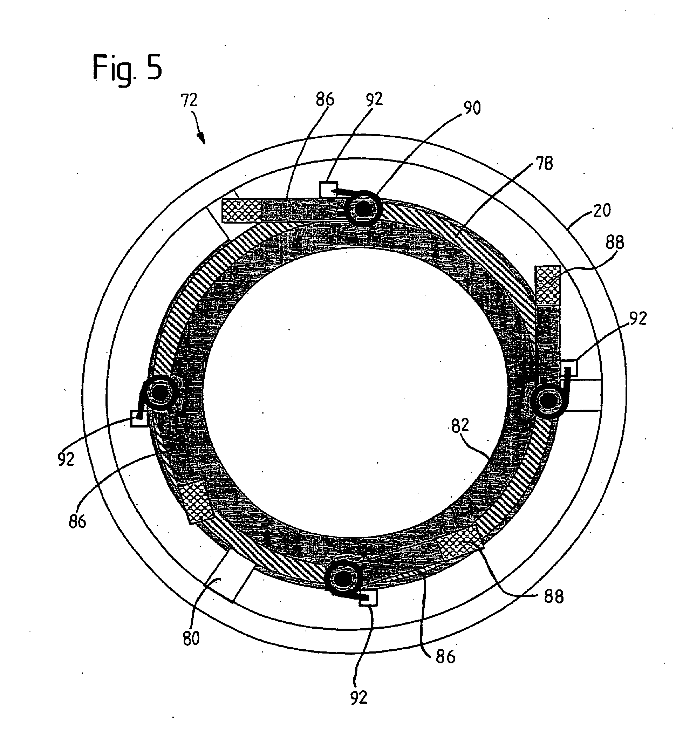

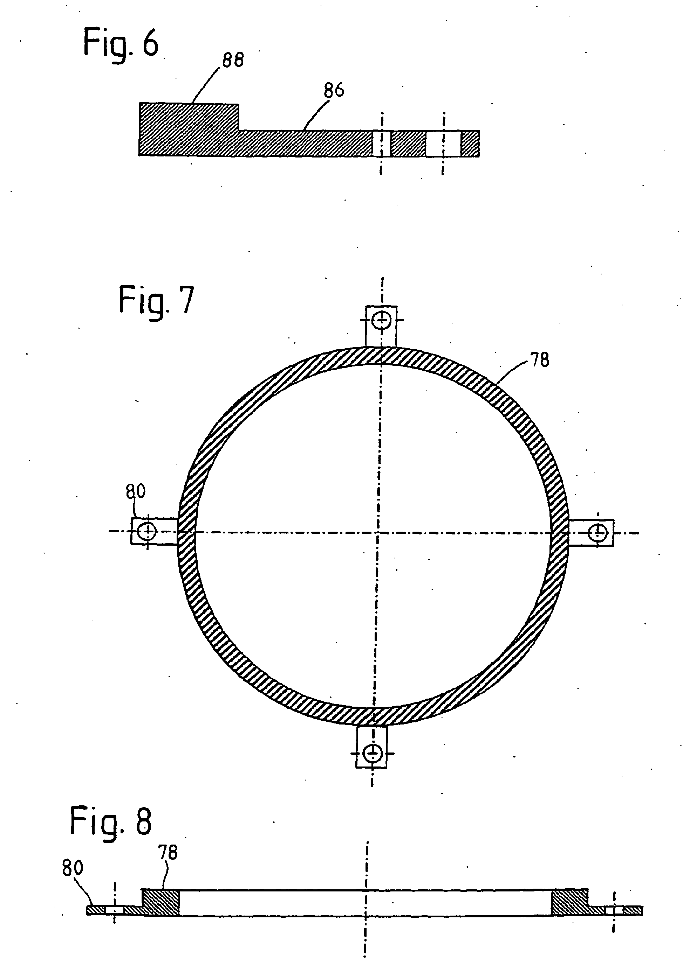

Die Reibeinrichtung 72 umfasst zwei Reibbaugruppen 74, 76. Die erste Reibbaugruppe 74 ist grundsätzlich der Sekundärseite 26 des Torsionsschwingungsdämpfers 12 zuzuordnen, während die zweite Reibbaugruppe 76 der Primärseite 16 zuzuordnen ist. Diese zweite Reibbaugruppe 76 kann beispielsweise den in den Figuren 7 und 8 dargestellten Reibring 78 umfassen, der über mehrere nach radial außen greifende Stegabschnitte 80 mit der Primärschwungmasse 20 fest verbunden ist. Die Reibbaugruppe 74 umfasst ebenfalls einen Reibring 82, der über eine Tellerfeder 84 oder dergleichen axial am radial äußeren Bereich der Zwischenplatte 38 abgestützt ist. An der bezüglich des Reibrings 82 anderen axialen Seite des Reibrings 78 umfasst die Reibbaugruppe 74 eine Mehrzahl von in Umfangsrichtung aufeinander folgend angeordneten und an dem Bauteil 60 der Kraftübertragungsanordnung 56 schwenkbar getragenen Reibelementen 86. Diese sind, wie in Fig. 5 erkennbar, näherungsweise in Umfangsrichtung orientiert und um Schwenkachsen schwenkbar, die näherungsweise parallel zur Drehachse A des Drehmomentübertragungssystems 10 liegen. Jedes dieser Reibelemente 86 weist in seinem freien Endbereich einen Reibabschnitt 88 auf, mit welchem dieses in Reibwechselwirkung mit dem axial folgenden Reibring 78 der Reibbaugruppe 76 bringbar ist. Weiterhin ist in Zuordnung zu jedem der Reibelemente 86 eine hier als Schenkelfeder ausgestaltete Vorspannfeder 90 vorgesehen, die am Reibelement 86 einerseits und am Bauteil 60 der Kraftübertragungsanordnung 56 andererseits angreift, um die Reibelemente 86 nach radial innen vorzuspannen, also in einen Zustand vorzuspannen, wie er bei den in Fig. 5 unten bzw. links erkennbaren Reibelementen 86 vorliegt. In diesem Zustand ist der Reibabschnitt 88 dem Reibring 78 gegenüber liegend positioniert, so dass bei entsprechender Krafteinleitung durch die Reibabschnitte 88 der Reibelemente 86 der Reibring 78 gegen den Reibring 82 gepresst wird. Dies geschieht dann, wenn bei nach radial innen vorgespannt gehaltenen Reibelementen 86 die Betätigungskraft F erzeugt wird und somit in der Darstellung der Fig. 3 das Teil 60 der Kraftübertragungsanordnung 56 mit den daran getragenen Reibelementen 86 nach rechts, also auf die Zwischenplatte 38 zu, gezogen wird. Es liegt bei nach radial innen vorgespannt gehaltenen Reibelementen 86 dann der Aktivzustand der Reibeinrichtung 72 vor.

Nachdem das Drehmomentübertragungssystem 10 den kritischen Bereich durchlaufen hat und beispielsweise mit Leerlaufdrehzahl dreht, kann dann dafür gesorgt werden, dass die Reibeinrichtung 72 in ihren in Fig. 2 rechts erkennbaren Deaktivzustand gelangt, in welchem sie auch dann, wenn die Betätigungskraft F für den zweiten Kupplungsbereich 42 erzeugt wird, um diesen in einen eingerückten Zustand zu bringen, praktisch keine Reibwirkung erzeugen kann. In diesen Zustand, also in den Deaktivzustand, kann die Reibeinrichtung dadurch gebracht werden, dass die Erzeugung der Betätigungskraft F kurzzeitig unterbrochen wird und insofern die Reibwechselwirkung zwischen den Reibelementen 86 und dem Reibring 78 aufgehoben wird. Da nunmehr das System in einem rotierenden Zustand ist, wirkt auf die Reibelemente 86 eine Fliehkraft ein. Die durch die Vorspannfeder 90 zu erzeugende und die Reibelemente 86 nach radial innen vorspannende Kraft ist so zu dimensionieren, dass beispielsweise nach Durchlaufen des kritischen Bereichs und Drehen mit einer Drehzahl über diesem kritischen Bereich die dann vorhandene Fliehkraft ausreicht, um die Reibelemente 86 entgegen der durch die Vorspannfeder 90 erzeugten Vorspannkraft nach radial außen zu verschwenken, also in den in der Fig. 5 rechts und oben erkennbaren Zustand zu verschwenken. In diesem Zustand ist der jeweilige Reibabschnitt 88 nicht mehr mit dem Reibring 78 ausgerichtet, wie dies auch in der Fig. 4 veranschaulicht ist. Wird in diesem Deaktivzustand der Reibeinrichtung 72 dann wieder die Betätigungskraft F erzeugt, so fehlt auf Grund des Herausverschwenkens der Reibelemente 86 ein Komponentenbereich in der Kraftübertragungskette der Reibeinrichtung 72, so dass in der Reibeinrichtung 72 im Wesentlichen keine Gegenkraft erzeugt wird und die gesamte Betätigungskraft dann in die Anpressplatte 48 eingeleitet werden kann. Hierzu kann auch vorgesehen sein, dass bei vollständig entspannter Tellerfeder 84 der Reibring 82 nicht gegen den Reibring 78 gepresst ist oder nur mit geringer Kraft gegen diesen gepresst ist, um, sofern erforderlich, noch ein gewisses Restreibmoment auch für den dann vorhandenen Schwingungsdämpfungszustand des Torsionsschwingungsdämpfers 12 bereitzustellen.

Um in dem Zustand, in welchem die Reibelemente 78 nach radial außen verschwenkt sind, dafür zu sorgen, dass diese nicht in Kontakt mit anderen Baugruppen treten und somit eine Störung entstehen könnte, können am Teil 60 der Kraftübertragungsanordnung 56 Schwenkbewegungsanschläge 92 für die Reibelemente 86 vorgesehen sein, wobei diese Schwenkbewegungsanschläge 92 gleichzeitig auch der Abstützung der Vorspannfedern 90 dienen können.

Bei dem vorangehend beschriebenen Aufbau ist weiter dafür zu sorgen, dass die verschiedenen Systemkomponenten der ersten und der zweiten Reibbaugruppe 74, 76 so gestaltet sind, dass sie den axialen Durchgriff des Verbindungselements 32 ermöglichen. Hierzu können die Reibringe 78, 82, wie dies mit Bezug auf den Reibring 78 bereits auch erläutert wurde, zumindest im radial äußeren Bereich segmentiert sein. Auch die Tellerfeder 84 kann entsprechende Durchgriffsaussparungen aufweisen, wobei derartige Aussparungen in Umfangsrichtung derart dimensioniert sein sollten, dass bei dem maximal möglichen Relativdrehweg zwischen der Primärseite 16 und der Sekundärseite 26 ein gegenseitiges Stören mit dem Verbindungselement 32 nicht auftreten kann. Grundsätzlich ist es auch möglich, wie dies in der Fig. 5 auch veranschaulicht ist, neben der im radial äußeren Bereich in Umfangsrichtung segmentierten Ausgestaltung des Reibrings 78 mit seinen Stegen 80 den Reibring 82 und die zugeordnete Tellerfeder 84 radial so zu bemessen, dass sie nach radial außen hin nur so weit reichen, dass eine geeignete Wechselwirkung mit dem Reibring 78 möglich ist, ansonsten jedoch radial außerhalb eine Durchgriffsmöglichkeit für das Verbindungselement 32 zur Ankopplung desselben an die Zwischenplatte 38 möglich ist. Bei dieser Ausgestaltungsform ist es dann auch nicht erforderlich, im Reibring 82 bzw. der Feder 84 irgendwelche Durchgriffsaussparungen bereitzuhalten.

Bei derartigen Drehmomentübertragungssystemen, wie sie vorangehend beschrieben worden sind, also bei Drehmomentübertragungssystemen, bei welchen die Reibungskupplung 14 als Doppelkupplung 36 ausgestaltet ist, erfolgt die Betätigung derselben im Allgemeinen automatisiert, um die Abstimmung der beiden Kupplungsbereiche 40, 42 aufeinander bei der Durchführung von Schaltvorgängen zu ermöglichen. D.h., ein aktiver Eingriff des Fahrers in den Kuppelvorgang liegt nicht vor. Dies ermöglicht es, in vergleichsweise einfacher Art und Weise dafür zu sorgen, dass zumindest zum Starten des Antriebsaggregats die Reibeinrichtung 72 in ihrem Aktivzustand ist. Hierzu kann beispielsweise vorgesehen sein, dass beim Anlassen des Antriebsaggregats zunächst beim Kupplungsbereich 42 keine Betätigungskraft F erzeugt wird, so dass die Reibeinrichtung 72 in ihren Aktivzustand gelangen kann und erst dann die Betätigungskraft F erzeugt wird, um die im Aktivzustand sich befindende Reibeinrichtung 72 auch in einen Reibzustand zu bringen und somit die Primärseite 16 und die Sekundärseite 26 zu verkoppeln. Beim Erreichen der Leerlaufdrehzahl kann dann, wie vorangehend beschrieben, die Reibeinrichtung 72 durch Aufheben der Betätigungskraft F und durch Ermöglichen der fliehkraftbedingten Verschwenkung der Reibelemente 86 in den Deaktivzustand gebracht werden. Grundsätzlich ist es auch möglich, dass beim Abstellen des Antriebssystems, also dann, wenn ein Abfall der Drehzahl von der Leerlaufdrehzahl zu erwarten ist, zunächst dafür gesorgt wird, dass die Reibeinrichtung 72 in ihren Aktivzustand gelangen kann, beispielsweise durch Aufheben der Betätigungskrafterzeugung beim Kupplungsbereich 42, sofern dies nicht ohnehin der Fall ist, und dann durch erneutes Erzeugen der Betätigungskraft F die Reibeinrichtung 72 auch in den Reibzustand gebracht wird, so dass sowohl beim Abfall der Drehzahl und damit Durchlaufen des kritischen Bereichs, als auch für den nächsten Startvorgang die Reibeinrichtung 72 im Aktivzustand ist.

Bei einem System wie es in den vorangehend beschriebenen Figuren dargestellt ist, ist es selbstverständlich auch möglich, in Zuordnung zu beiden Kupplungsbereichen 40, 42 derartige Reibeinrichtungen vorzusehen, so dass immer bei demjenigen Kupplungsbereich, bei welchem momentan kein Drehmoment zu übertragen ist, durch entsprechende Betätigungskraftübertragung bzw. Erzeugung ein Reibmoment generiert werden kann, das ein bestimmtes Ausmaß an Verkopplung zwischen Primärseite 16 und Sekundärseite 26 gewährleistet. Es kann somit beispielsweise ein aktive Schwingungsdämpfung betrieben werden bzw. dafür gesorgt werden, dass in bestimmten Betriebszuständen dem Auftreten von Drehschwingungen durch verstärkte Reibwirkung entgegengewirkt wird. Da dies bedeutet, daß bei beiden Kupplungsbereichen 40, 42 gleichzeitig eine Betätigungskraft erzeugt wird, ist sicherzustellen, dass nur in Zuordnung zu einem der Kupplungsbereiche ein Gang eingelegt ist.

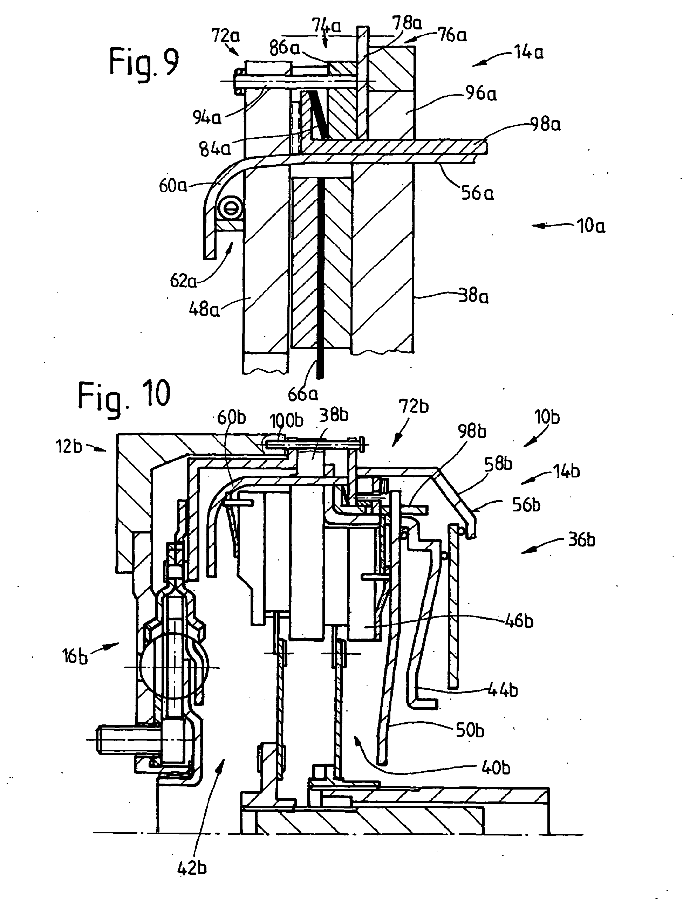

Eine alternative Ausgestaltungsform der Reibeinrichtung ist in Fig. 9 dargestellt. In Fig. 9, welche nur einen Teilausschnitt der in Fig. 1 dargestellten Gesamtanordnung zeigt, sind Komponenten, welche hinsichtlich Aufbau bzw. Funktion vorangehend bereits beschriebenen Komponenten entsprechen, mit dem gleichen Bezugszeichen unter Hinzufügung eines Anhangs "a" bezeichnet.

Bei der in Fig. 9 dargestellten Ausgestaltungsvariante sind die Reibelemente 86a der ersten Reibbaugruppe 74a über Achsbauteile 94a an der Anpressplatte 48a getragen, was bedeutet, dass diese Reibelemente 86a grundsätzlich wieder der Sekundärseite zuzuordnen sind. Der Reibring 78a der Reibbaugruppe 76a kann, ebenso wie vorangehend beschrieben, wieder an der Primärmasse des Torsionsschwingungsdämpfers getragen sein. An der bezüglich der Reibelemente 86a anderen Seite des Reibrings 78a liegt unmittelbar der radial äußere Bereich 96a der Zwischenplatte 38a, welcher nunmehr einen Bestandteil der ersten Reibbaugruppe 74a bereitstellt. Um die Kraft bzw. den Kraftanteil F' in die Reibeinrichtung 72a einleiten zu können, ist ein Krafteinleitelement 98a vorgesehen, das über die Tellerfeder 84a auf die Reibelemente 86a einwirken kann. Dieses Krafteinleitelement 98a kann an dem Teil 60a der Kraftübertragungsanordnung 56a festgelegt sein, kann aber auch getrennt von diesem Teil 60a direkt mit der zugeordneten Kraftbeaufschlagungsanordnung, also den Hebelelementen derselben oder ggf. Federzungen einer Membranfeder oder dergleichen, zusammenwirken, um die erforderliche Axialverlagerung zu erlangen. Da bei dieser Ausgestaltungsform die Anpressplatte 48a bei Auftreten von Verschleiß im Bereich der Kupplungsscheibe 66a sich näher an die Zwischenplatte 38a heranbewegen wird, muss darauf geachtet werden, dass entsprechender Bauraum zwischen dem Krafteinleitelement 98a und dem radial äußeren Bereich der Anpressplatte 48a vorgehalten wird.

Eine weitere Ausgestaltungsform eines Drehmomentübertragungssystems wird nachfolgend mit Bezug auf die Figuren 10 bis 12 beschrieben. Komponenten, welche vorangehend beschriebenen Komponenten hinsichtlich Aufbau und Funktion entsprechen, sind mit dem gleichen Bezugszeichen unter Hinzufügung eines Anhangs "b" beschrieben. Da hinsichtlich des Aufbaus des Torsionsschwingungsdämpfers und der Reibungskupplung im Wesentlichen Übereinstimmungen mit der Ausgestaltungsform gemäß Fig. 1 entspricht, wird diesbezüglich auf die vorangehenden Ausführungen verwiesen.

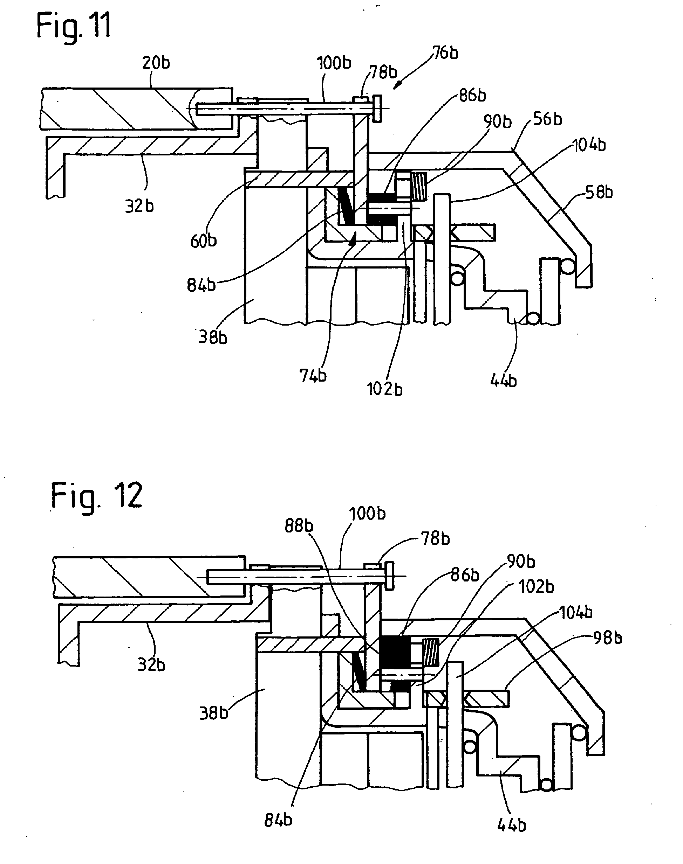

Auch bei der Ausgestaltungsform gemäß den Figuren 10 bis 12 ist der Reibring 78b der zweiten Reibbaugruppe 76b an die Primärseite 16b des Torsionsschwingungsdämpfers angekoppelt. Hierzu können mehrere stift-oder bolzenartige Verbindungsglieder 100b vorgesehen sein, welche entweder radial außen an der Zwischenplatte 38b vorbeigeführt sind, oder in dieser und auch in dem Verbindungselement 32b vorgesehene Umfangsaussparungen durchsetzen. Die Reibelemente 86b der ersten Reibbaugruppe 74b sind an einem nach radial außen greifenden Abschnitt 102b des Gehäuses 44b schwenkbar getragen und durch die jeweils zugeordneten Federn 90b nach radial innen vorgespannt, also in einen Zustand vorgespannt, in welchen sie reibend wirksam werden. Es ist wieder ein Krafteinleitelement 98b vorgesehen, welches sowohl den Abschnitt 102b, als auch die Reibelemente 86b und den Reibring 78b axial überbrückt und über die Tellerfeder 84b den Reibring 78b beaufschlagen kann. Um diese Beaufschlagungswirkung erzeugen zu können, ist die Kraftbeaufschlagungsanordnung 50b des Kupplungsbereichs 40b nach radial außen über das Gehäuse 44b hinaus verlängert. Hier können also beispielsweise die einzelnen Hebelabschnitte der Kraftbeaufschlagungsanordnung 50b so lang ausgestaltet sein, dass sie entsprechende Öffnungen im Gehäuse 44b und auch im Krafteinleitelement 98b durchsetzen können. Bei Verschwenkung der Hebelelemente bzw. der Kraftbeaufschlagungsanordnung 50b zum Einrücken des Kupplungsbereichs 40b ziehen die radial äußeren Abschnitte 104b der Kraftbeaufschlagungsanordnung 50b das Krafteinleitelement 98b in axialer Richtung, so dass dieses über die Tellerfeder 84b den Reibring 78b beaufschlagt, welcher sich wiederum an den Reibabschnitten 88b der Reibelemente 86b abstützen kann, wenn diese in ihrem nach radial innen verschwenkten aktiven Zustand sind, welcher in Fig. 11 dargestellt ist. Bei beispielsweise wiederum fliehkraftbedingt erfolgender Verschwenkung der Reibelemente 86b in ihren nicht aktiven Zustand, welcher in Fig. 12 gezeigt ist, liegen die Reibelemente 86b mit ihren Reibabschnitten 88b derart, dass eine Reibwechselwirkung bzw. eine Abstützung des Reibrings 78b nicht erfolgen kann. Beispielsweise können die Reibabschnitte 88b dann so positioniert sein, dass sie außerhalb des ringartigen Abschnitts des Reibrings 78b liegen, welcher so ausgestaltet sein kann, wie in Fig. 5 gezeigt.

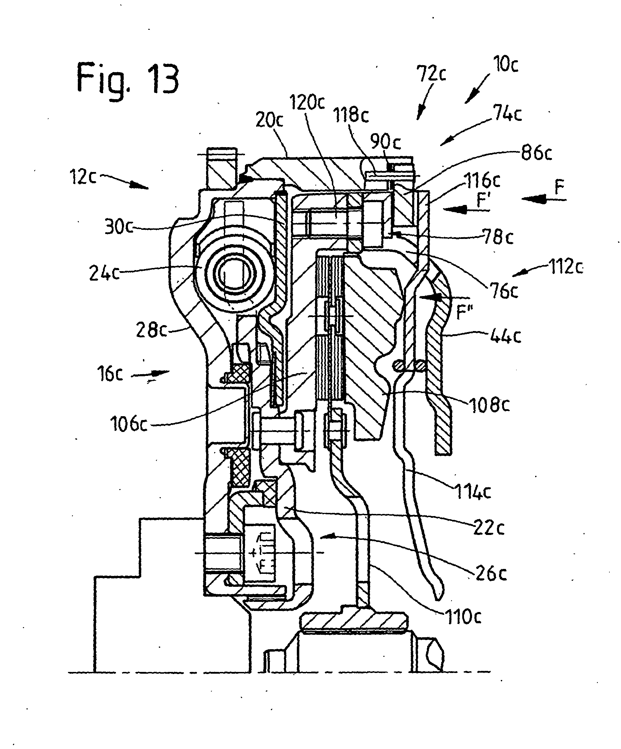

Eine weitere Ausgestaltungsform eines erfindungsgemäßen Drehmomentübertragungssystems wird nachfolgend mit Bezug auf die Figuren 13 bis 18 beschrieben. Komponenten, welche vorangehend beschriebenen Komponenten hinsichtlich Aufbau und Funktion entsprechen, sind mit den gleichen Bezugszeichen unter Hinzufügung eines Anhangs "c" bezeichnet.

Man erkennt in Fig. 13 zunächst, dass der Torsionsschwingungsdämpfer 12c hier als so genannter nasslaufender Schwingungsdämpfer ausgestaltet ist. Die nunmehr der Primärseite 16c zuzuordnenden Deckscheibenelemente 28c, 30c bilden eine nach radial außen fluiddicht abgeschlossene Kammer, in welcher die Dämpferfedern 24c angeordnet sind und weiterhin ein viskoses Medium bereitgestellt sein kann, um einerseits eine weitere Dämpfungskomponente einzuführen, und andererseits eine Schmierung bereitstellen zu können. An dem Deckscheibenelement 28c ist im radial äußeren Bereich die Primärmasse 20c getragen. Ferner sind an diesen Deckscheibenelementen 28c mehrere Planetenräder getragen, die mit einer hohlradartigen Verzahnung am Zentralscheibenelement 22c in Kämmeingriff stehen und somit bei Relativdrehung von Primärseite 16c und Sekundärseite 26c in Drehung versetzt werden. Mit dem Zentralscheibenelement 22c, das nunmehr der Sekundärseite 26c zuzuordnen ist, ist weiterhin eine Sekundärmasse 106c fest verbunden, welche das Widerlager für die Anpressplatte 108c bzw. die Kupplungsscheibe 110c bildet. Mit dieser Sekundärmasse 106c ist im radial äußeren Bereich das Gehäuse 44c der nunmehr als herkömmliche Einfachkupplung 112c ausgestalteten Reibungskupplung 14c verbunden. Als Kraftbeaufschlagungsanordnung 114c ist bei dem hier gezeigten Beispiel einer Normal-Geschlossen-Kupplung eine Membranfeder oder dergleichen vorgesehen, die am Gehäuse 44c einerseits und der Anpressplatte 108c andererseits abgestützt ist. Ebenso wie bei den vorangehend beschriebenen Varianten bildet die Kraftbeaufschlagungsanordnung 114c hier einen Systembereich des Betätigungssystems, also desjenigen Systems, durch welches die zum Verstellen der Kupplung zwischen einem Einrückzustand und einem Ausrückzustand erforderlichen Kräfte erzeugt werden. Während bei einer Kupplung oder einem Kupplungsbereich des Normal-Offen-Typs das Betätigungssystem durch entsprechende Stellgliedansteuerung Einrückkräfte erzeugt, wird die Einrückkraft bei einem Betätigungssystem für eine Kupplung des Normal-Geschlossen-Typs durch den Kraftspeicher bereitgestellt, während dann eine Ausrückkraft durch ein Stellglied oder manuell zu erzeugen ist.

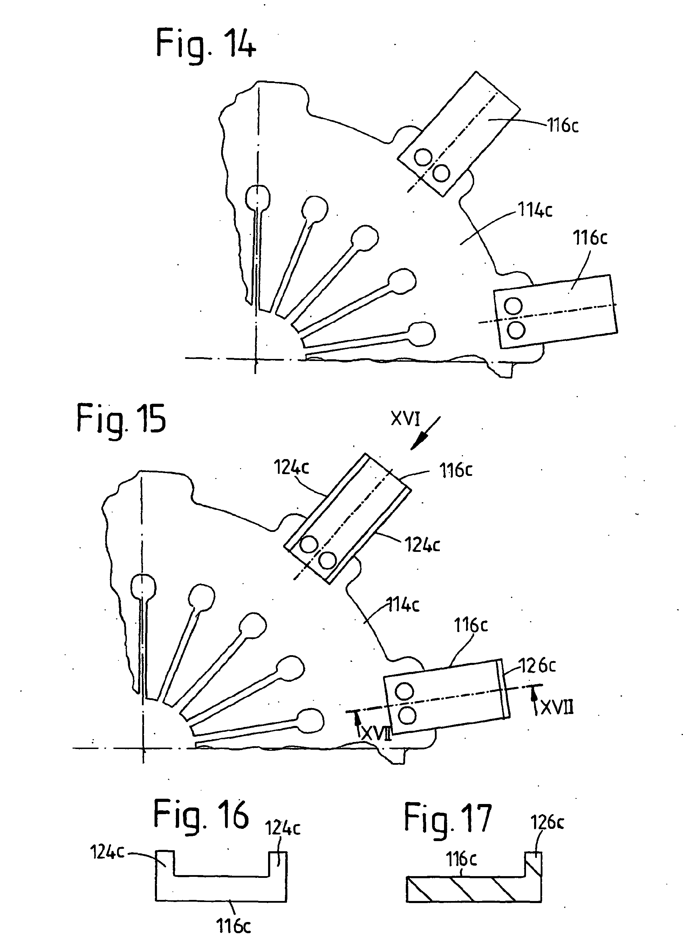

In ihrem radial äußeren Bereich durchgreift die Kraftbeaufschlagungsanordnung 114c beispielsweise mit daran festgelegten Beaufschlagungsabschnitten 116c, welche in Fig. 14 erkennbar sind, entsprechende Aussparungen im Gehäuse 44c, um die Reibeinrichtung 72c in einen Reibzustand bringen zu können. Die Reibelemente 86c der ersten Reibbaugruppe 74c sind nunmehr über Schwenkachsteile 118c an der Primärseite 16c bzw. der Primärmasse 20c derselben schwenkbar getragen und sind wiederum durch die zugeordneten Vorspannfedern 90c nach radial innen vorgespannt. An einer axialen Seite dieser Reibelemente 86c bzw. der reibend wirksam werden Reibabschnitte 88c derselben liegt ein sich am Gehäuse 44c bzw. an dieses an der Sekundärmasse 106c festlegenden Schraubbolzen 120c sich abstützender Reibring 78c der zweiten Reibbaugruppe 76c. An der anderen Seite der Reibelemente 86c liegen die bereits angesprochenen Beaufschlagungsabschnitte 116c. Im Einrückzustand der Reibungskupplung 14c, in welchem die Kraftbeaufschlagungsanordnung 114c, also beispielsweise Membranfeder, die Anpressplatte 108c beaufschlagt, beaufschlagen gleichzeitig die Beaufschlagungsabschnitte 116c die diesen jeweils zugeordneten Reibelemente 86c, die bei nicht ausreichender Drehzahl federvorgespannt nach radial innen verschwenkt sind. Dadurch werden die Reibelemente 86c gegen den Reibring 78c gepresst und die Reibwirkung in der Reibeinrichtung 72c erzeugt. Nach Durchlaufen des kritischen Bereichs, also beispielsweise des Resonanzbereichs, kann die Reibungskupplung 14c kurz ausgerückt werden, so dass die Beaufschlagungsabschnitte 116c von den jeweiligen Reibelementen 86c zumindest kurzzeitig wegschwenken und fliehkraftbedingt die Reibelemente 86c dann nach radial außen schwenken, bis sie, wie dies in Fig. 18 dargestellt ist, an einem axial vorstehenden Abschnitt 122c der Primärmasse 20c zur Anlage kommen und nicht weiter verschwenken können. In diesem Zustand sind die Reibabschnitte 88c so verschwenkt, dass sie nicht mehr von den Beaufschlagungsabschnitten 116c beaufschlagt werden können und somit die Reibwechselwirkung mit dem Reibring 78c nicht mehr erzeugt werden kann. Erst dann, wenn die Drehzahl unter ein bestimmtes Niveau gefallen ist und die Vorspannkraft der Federn 90c ausreicht, um die Reibelemente 86c nach radial innen zu verschwenken, kann bei erneutem Ausrücken der Reibungskupplung 14c dafür gesorgt werden, dass die Reibelemente 86c wieder nach radial innen verschwenken und somit die Reibeinrichtung 72c wieder in ihrem Aktivzustand ist.

Um bei dieser Anordnung dafür zu sorgen, dass auch im Aktivzustand der Reibeinrichtung 72c eine möglicherweise auftretende Relativdrehung zwischen der Primärseite 16c und der Sekundärseite 26c des Torsionsschwingungsdämpfers 12c nicht dazu führen kann, dass die Reibelemente 116c aus dem Umfangsbereich und somit Wirkbereich der Beaufschlagungsabschnitte 116c herausbewegt werden können, ist es möglich, an den Beaufschlagungsabschnitten 116c Sicherungsbereiche vorzusehen. Die Fig. 16 zeigt einen Beaufschlagungsabschnitt 116c, bei welchem an beiden Umfangsrandbereichen axial abstehende Sicherungswandungen 124c vorhanden sind. Bei aktivierter Reibeinrichtung 72c bzw. nach radial innen verschwenkten Reibelementen 86c liegen diese zwischen den beiden Sicherungswandungen 124c. Eine Relativumfangsbewegung hätte eine formschlüssige Haltewirkung zwischen den Reibelementen 86c und den seitlich davon jeweils angeordneten Sicherungswandungen 124c zur Folge. Bei der in Fig. 17 gezeigten Variante ist am radial äußeren Bereich des Beaufschlagungsabschnitts 116c eine in Umfangsrichtung sich erstreckende Sicherungswandung 126c vorgesehen, welche das Reibelement von radial außen axial übergreifen kann und somit von radial außen her eine Reibwechselwirkung oder/und eine Formschlusswechselwirkung mit dem Reibelement 86c erzeugen kann.

Die in Fig. 13 gezeigte Reibungskupplung 14c kann zur manuellen Betätigung vorgesehen sein. D.h., es ist durch einen Fahrer dafür zu sorgen, dass die Reibeinrichtung 72c für die erforderlichen Phasen in ihren Aktivzustand gebracht wird. Dies kann, ebenso wie bei den vorangehend beschriebenen automatisierten Systemen, so erfolgen, dass beispielsweise vor dem Anlassen des Antriesbsaggregats der Fahrer die Kupplung einmal betätigt, um das Verschwenken der Reibelemente 86c nach radial innen zu ermöglichen. Nachdem der Fahrer dann das Kupplungspedal wieder freigegeben hat und die Kupplung wieder eingerückt ist, kann dann das Antriebsaggregat gestartet werden. Um hier eine erhöhte Sicherheit vorzusehen, kann der Stellzustand der Kupplung sensorisch erfasst werden, so dass erst dann, wenn einmal das Ausrücken und wieder Einrücken der Kupplung vorgenommen worden ist und entsprechend auch erfasst worden ist, das Antriebsaggregat zur Durchführung des Startvorgangs freigegeben wird. Hier kann weiterhin für den Fahrer ein Warnsignal erzeugt werden, das diesen darauf hinweist, dass er zunächst noch das Kupplungspedal einmal durchdrücken muss. Dieses Bringen der Reibeinrichtung 72c in den Aktivzustand kann grundsätzlich aber auch vor dem Abstellen des Antriebsaggregats bzw. des Gesamtsystems erfolgen, wobei auch hier der Fahrer durch ein entsprechendes Signal darauf hingewiesen werden kann, dass er zunächst noch einmal die Kupplung zu betätigen hat, um die Reibeinrichtung 72c in ihren Aktivzustand zu bringen.

Bei einem erfindungsgemäß ausgestalteten Drehmomentübertragungssystem wird durch die Möglichkeit, die Reibeinrichtung zwischen einem Aktivzustand und einem Deaktivzustand zu verstellen, dafür gesorgt, dass diese zusammen mit einer Reibungskupplung oder einem Kupplungsbereich derselben betätigt werden kann, wobei nur dann, wenn die Reibungskupplung in ihrem Aktivzustand ist, ein Teil der Betätigungskraft zur Reibkrafterzeugung genutzt wird, während bei deaktivierter Reibeinrichtung die volle Betätigungskraft in die Reibungskupplung bzw. einen Kupplungsbereich derselben fließen kann. Dies hat zur Folge, dass keine über den normalen Kraftbereich, der zur Betätigung der Reibungskupplung erforderlich ist, hinausgehenden Kräfte erzeugt werden müssen, um auch die Reibeinrichtung in den Reibzustand bringen zu können. Vielmehr wird die Reibeinrichtung in demjenigen Betätigungsbereich, der erforderlich ist, um die Reibungskupplung zwischen ihrem vollkommen eingerückten und ihrem vollkommen ausgerückten Zustand zu verstellen, mitbetätigt. Dies vereinfacht den Gesamtaufbau und insbesondere den Aufbau der Betätigungssysteme, sofern die Betätigung automatisiert erfolgt, da diese dann nicht übermäßig groß dimensioniert werden müssen.

Beim Aufbau der Reibeinrichtung sollte darauf geachtet werden, dass die zum Bringen derselben in den Reibzustand erforderliche Kraft so bemessen ist, dass, wie in Fig. 19 erkennbar, auch bei aktivierter Reibeinrichtung die maximale Anpresskraft erst kurz vor Erreichen des Endes des Schließwegs, der bei nicht aktivierter Reibeinrichtung zu durchlaufen ist, erreicht wird, so dass einerseits auf Grund des vergleichsweisen großen Schließwegs bis zum Erreichen der maximalen Reibkraft in der Reibeinrichtung eine genaue Ansteuerung derselben möglich ist und andererseits Bauteiletoleranzen gut kompensiert werden können.

Abschließend sei noch darauf hingewiesen, dass selbstverständlich an den verschiedenen dargestellten erfindungsgemäßen Systemen Variationen vorgenommen werden können, ohne vom Prinzip der vorliegenden Erfindung abzuweichen. So könnte selbstverständlich die Reibeinrichtung in anderen Bereichen, beispielsweise weiter radial innen positioniert sein. Die Kraftbeaufschlagungsanordnungen können, wie vorangehend ausgeführt, entweder als Hebelanordnungen bereitgestellt werden, so dass zum Einrücken der Kupplung eine Einrückkraft erzeugt werden muss, oder können als Kraftspeicher bzw. Membranfedern ausgestaltet sein, so dass für diese eine Ausrückkraft zu erzeugen ist, während die Einrückkraft bzw. in diesem Falle dann auch der in die Reibeinrichtung fließende Kraftanteil durch die Kraftspeicher selbst bereitgestellt wird.

Weiterhin ist es selbstverständlich auch möglich, dass die Kräfte zum Verstellen der Reibungskupplung zwischen ihrem Aktivzustand und ihrem Deaktivzustand in anderer Art und Weise als vorangehend beschrieben erzeugt werden können. Es können selbstverständlich andere Vorspann- oder Federelemente vorgesehen sein. Ferner können die Kräfte auch beispielsweise auf elektromagnetischem Wege generiert werden, so dass eine Verstellung der Reibelemente nicht nur in Abhängigkeit vom sich ändernden Drehzahlzustand vorgenommen werden kann, sondern auch aktiv in Abhängigkeit von anderen Parametern die Reibeinrichtung zwischen ihrem Aktivzustand und ihrem Deaktivzustand verstellt werden kann.

Es sei noch einmal darauf hingewiesen, dass im Sinne der vorliegenden Erfindung als Betätigungskraft diejenige Kraft zu interpretieren ist, die dazu beiträgt, zum einen die Reibungskupplung oder einen Kupplungsbereich in einen Einrückzustand zu bringen, also eine Einrückkraft, und zum anderen bei im Aktivzustand gehaltener Reibeinrichtung diese zu beaufschlagen und somit eine Reibkraft zu erzeugen. Bei Kupplungen oder Kupplungsbereichen des Normal-Offen-Typs wird diese Betätigungskraft bzw. Einrückkraft allgemein durch Stellglieder erzeugt, wobei, wie bereits angeführt, die vorangehend beschriebenen Kraftbeaufschlagungsanordnungen, also Kraftübertragungshebel oder dergleichen, grundsätzlich den Betätigungssystemen auch zugerechnet werden können, da sie dazu dienen, die Betätigungskraft in die Kupplung einzuleiten. Bei Kupplungen oder Kupplungsbereichen des Normal-Geschlossen-Typs wird diese in zwei Kraftanteile aufzuteilende Betätigungskraft durch einen Kraftspeicher, beispielsweise Membranfeder oder dergleichen, bereitgestellt, welcher letztendlich dann zusammen mit denjenigen Systembereichen, die zur Beaufschlagung des Kraftspeichers dienen, das Gesamtbetätigungssystem bereitstellt, mit welchem die Kupplung zwischen einem Einrückzustand und einem Ausrückzustand verstellt werden kann.

## Patentansprüche

1. Drehmomentübertragungssystem, umfassend:
- eine Schwingungsdämpfungsanordnung (12; 12b; 12c) mit einer mit einem Antriebsorgan zur Drehung um eine Drehachse (A) zu koppelnden Primärseite (16; 16a; 16b; 16c), einer gegen die Wirkung einer Dämpferfederanordnung (24; 24b; 24c) bezüglich der Primärseite (16; 16b; 16c) um die Drehachse (A) drehbaren Sekundärseite (26; 26b; 26c) und einer Reibeinrichtung (72; 72a; 72b; 72c) zur Erzeugung einer Reibungskopplung zwischen Primärseite (16; 16b; 16c) und Sekundärseite (26; 26b; 26c),
- eine Reibungskupplung (14; 14a; 14b; 14c) an der Sekundärseite (26; 26b; 26c) der Schwingungsdämpfungsanordnung (12; 12b; 12c),
- ein Betätigungssystem zur Erzeugung einer Betätigungskraft (F) zur Betätigung der Reibungskupplung (14; 14a; 14b; 14c) zwischen einem Einrückzustand und einem Ausrückzustand und zur Betätigung der Reibeinrichtung (72; 72a; 72b; 72c),
**dadurch gekennzeichnet, dass**
die Reibeinrichtung (72; 72a; 72b; 72c) bei Beaufschlagung durch das Betätigungssystem zwischen einem Aktivzustand, in welchem die Reibungskopplung zwischen Primärseite (16; 16b; 16c) und Sekundärseite (26; 26b; 26c) erzeugbar ist, und einem Deaktivzustand, in welchem im Wesentlichen keine Reibungskopplung zwischen Primärseite (16; 16b; 16c) und Sekundärseite (26; 26b; 26c) erzeugbar ist, umschaltbar ist, wobei die Reibeinrichtung (72; 72a; 72b; 72c) eine mit der Primärseite (16; 16b; 16c) gekoppelte erste Reibbaugruppe (74; 74a; 74b; 74c) und eine mit der Sekundärseite (26; 26b; 26c) gekoppelte zweite Reibbaugruppe (76; 76a; 76b; 76c) aufweist, und im Aktivzustand der Reibeinrichtung (72; 72a; 72b; 72c) durch Betätigungskraftbeaufschlagung vermittels des Betätigungssystems eine Reibwechselwirkung zwischen der ersten Reibbaugruppe (74; 74a; 74b; 74c) und der zweiten Reibbaugruppe (76; 76a; 76b; 76c) erzeugbar ist, wobei wenigstens eine Reibbaugruppe von erster Reibbaugruppe (74; 74a; 74b; 74c) und zweiter Reibbaugruppe (76; 76a; 76b; 76c) wenigstens ein Baugruppenelement (86; 86a; 86b; 86c) umfasst, das zum Umschalten der Reibeinrichtung (72; 72a; 72b; 72c) zwischen dem Aktivzustand, in welchem es eine Reibwechselwirkung der Reibbaugruppen bewirken kann, und dem Deaktivzustand, in welchem es im Wesentlichen keine Reibwechselwirkung der Reibbaugruppen bewirken kann, verstellbar ist, indem das wenigstens eine Baugruppenelement (86; 86a; 86b; 86c) durch eine Vorspannfeder (90; 90b; 90c) in den Aktivzustand vorgespannt ist, und durch Stellkrafteinwirkung, die durch Fliehkrafteinwirkung erfolgt, in den Deaktivzustand verstellbar ist.

2. Drehmomentübertragungssystem nach Anspruch 1,
**dadurch gekennzeichnet, dass** das wenigstens eine Baugruppenelement (86; 86a; 86b; 86c) an der mit der einen Reibbaugruppe gekoppelten Seite von Primärseite (16; 16b; 16c) und Sekundärseite (26; 26b; 26c) zwischen dem Aktivzustand und dem Deaktivzustand verschwenkbar getragen ist.

3. Drehmomentübertragungssystem nach einem der Ansprüche 1 oder 2,
**dadurch gekennzeichnet, dass** Vorspannung und Stellkrafteinwirkung derart aufeinander abgestimmt sind, dass bei Erreichen einer vorbestimmten Drehzahl oder eines vorbestimmten Drehzahlbereichs ein Verstellen des wenigstens einen Baugruppenelements (86; 86a; 86b; 86c) zwischen dem Aktivzustand und dem Deaktivzustand erfolgen kann.

4. Drehmomentübertragungssystem nach Anspruch 1 und Anspruch 3,
**dadurch gekennzeichnet, dass** bei Erhöhen der Drehzahl die Vorspannung bis zum Erreichen der vorbestimmten Drehzahl oder des vorbestimmten Drehzahlbereichs die Fliehkrafteinwirkung wenigstens bereichsweise kompensiert.

5. Drehmomentübertragungssystem nach einem der Ansprüche 1 bis 4,
**dadurch gekennzeichnet, dass** bei Erzeugung einer Betätigungskraft durch das Betätigungssystem zum Verstellen der Reibungskupplung zwischen dem Einrückzustand und dem Ausrückzustand ein erster Teil der Betätigungskraft als Einrückkraft wirksam ist und ein zweiter Teil der Betätigungskraft als Reibeinrichtungsbetätigungskraft wirksam ist.

6. Drehmomentübertragungssystem nach einem der Ansprüche 1 bis 5,
**dadurch gekennzeichnet, dass** die andere Reibbaugruppe ein ringartiges Reibelement (78; 78a; 78b; 78c) umfasst und dass das wenigstens eine Baugruppenelement (86; 86a; 86b; 86c) durch das Betätigungssystem bei Betätigungskrafterzeugung in Reibwechselwirkung mit dem ringartigen Reibelement (78; 78a; 78b; 78c) bringbar ist.

7. Drehmomentübertragungssystem nach Anspruch 6,
**dadurch gekennzeichnet, dass** die eine Reibbaugruppe eine Mehrzahl von in Umfangsrichtung aufeinander folgend angeordneten Baugruppenelementen (86; 86a; 86b; 86c) aufweist.

8. Drehmomentübertragungssystem nach Anspruch 6 oder 7,
**dadurch gekennzeichnet, dass** die eine Reibbaugruppe an einer ersten Seite des ringartigen Reibelements (78; 78a; 78b) der anderen Reibbaugruppe das wenigstens eine Baugruppenelement (86; 86a; 86b) aufweist und an einer zweiten Seite des ringartigen Reibelements (78; 78a; 78b) wenigstens ein Widerlagerreibelement (82; 96a; 84b) aufweist.

9. Drehmomentübertragungssystem nach einem der Ansprüche 1 bis 8,
**dadurch gekennzeichnet, dass** die Reibeinrichtung (72; 72a; 72b; 72c) im Abstützweg der Betätigungskraft ein elastisches Element (84; 84a; 84b) umfasst.

10. Drehmomentübertragungssystem nach einem der Ansprüche 1 bis 9,
**dadurch gekennzeichnet, dass** die Reibungskupplung (14; 14b) eine Doppelkupplung (36; 36b) ist mit einem ersten Kupplungsbereich (40; 40b) und einem zweiten Kupplungsbereich (42; 42b) und dass die Reibeinrichtung (72; 72b) einen ersten Reibeinrichtungsbereich (72b) aufweist, der bei Betätigungskrafterzeugung durch das Betätigungssystem für den ersten Kupplungsbereich (40b) die Reibungskopplung zwischen Primärseite (16b) und Sekundärseite (26b) erzeugen kann oder/und einen zweiten Reibeinrichtungsbereich (72) umfasst, der bei Betätigungskrafterzeugung durch das Betätigungssystem für den zweiten Kupplungsbereich (42) die Reibungskopplung zwischen Primärseite (16) und Sekundärseite (26) erzeugen kann.

## Claims

1. Torque transmission system, comprising:
- a vibration damping arrangement (12; 12b; 12c) with a primary side (16; 16a; 16b; 16c) to be coupled to a driving member for rotation about an axis of rotation (A), a secondary side (26; 26b; 26c) which is rotatable with respect to the primary side (16; 16b; 16c) about the axis of rotation (A) counter to the action of a damping spring arrangement (24; 24b; 24c), and a friction device (72; 72a; 72b; 72c) for producing a frictional coupling between primary side (16; 16b; 16c) and secondary side (26; 26b; 26c),
- a friction clutch (14; 14a; 14b; 14c) on the secondary side (26; 26b; 26c) of the vibration damping arrangement (12; 12b; 12c),
- an actuating system for producing an actuating force (F) to actuate the friction clutch (14; 14a; 14b; 14c) between an engagement state and a disengagement state and to actuate the friction device (72; 72a; 72b; 72c),
**characterized in that**, when acted upon by the actuating system, the friction device (72; 72a; 72b; 72c) can be switched over between an active state, in which the frictional coupling between primary side (16; 16b; 16c) and secondary side (26; 26b; 26c) can be produced, and a deactivated state, in which essentially no frictional coupling between primary side (16; 16b; 16c) and secondary side (26; 26b; 26c) can be produced, the friction device (72; 72a; 72b; 72c) having a first friction subassembly (74; 74a; 74b; 74c) coupled to the primary side (16; 16b; 16c) and a second friction subassembly (76; 76a; 76b; 76c) coupled to the secondary side (26; 26b; 26c), and, in the active state of the friction device (72; 72a; 72b; 72c), by the actuating system applying an actuating force, a frictional interaction between the first friction subassembly (74; 74a; 74b; 74c) and the second friction subassembly (76; 76a; 76b; 76c) being able to be produced, at least one friction subassembly of first friction subassembly (74; 74a; 74b; 74c) and second friction subassembly (76; 76a; 76b; 76c) comprising at least one subassembly element (86; 86a; 86b; 86c) which, in order to switch over the friction device (72; 72a; 72b; 72c), can be adjusted between the active state, in which it can cause a frictional interaction of the friction subassemblies, and the deactivated state, in which it essentially cannot cause any frictional interaction of the friction subassemblies, by the at least one subassembly element (86; 86a; 86b; 86c) being prestressed by a prestressing spring (90; 90b; 90c) into the active state, and being adjustable into the deactivated state by the action of an adjusting force which takes place by the action of a centrifugal force.

2. Torque transmission system according to Claim 1,
**characterized in that** the at least one subassembly element (86; 86a; 86b; 86c) is supported on the side coupled to the one friction subassembly by the primary side (16; 16b; 16c) and secondary side (26; 26b; 26c) in a manner such that it can be pivoted between the active state and the deactivated state.

3. Torque transmission system according to either of Claims 1 and 2, **characterized in that** the prestress and the action of the adjusting force are coordinated with each other in such a manner that, when a predetermined rotational speed or a predetermined range of rotational speed is reached, an adjustment of the at least one subassembly element (86; 86a; 86b; 86c) between the active state and the deactivated state can take place.

4. Torque transmission system according to Claim 1 and Claim 3, **characterized in that**, when the rotational speed is increased, the prestress compensates for the action of centrifugal force, at least in some regions, until the predetermined rotational speed or the predetermined range of rotational speed is reached.

5. Torque transmission system according to one of Claims 1 to 4, **characterized in that**, when an actuating force is produced by the actuating system in order to adjust the friction clutch between the engagement state and the disengagement state, a first part of the actuating force is effective as the engagement force and a second part of the actuating force is effective as the actuating force for the friction device.

6. Torque transmission system according to one of Claims 1 to 5, **characterized in that** the other friction subassembly comprises a ring-like friction element (78; 78a; 78b; 78c), and **in that** the at least one subassembly element (86; 86a; 86b; 86c) can be brought by the actuating system, when it produces an actuating force, into frictional interaction with the ring-like friction element (78; 78a; 78b; 78c).

7. Torque transmission system according to Claim 6,
**characterized in that** the one friction subassembly has a plurality of subassembly elements (86; 86a; 86b; 86c) arranged consecutively in the circumferential direction.

8. Torque transmission system according to Claim 6 or 7, **characterized in that** the one friction subassembly has the at least one subassembly element (86; 86a; 86b) on a first side of the ring-like friction element (78; 78a; 78b) of the other friction subassembly and has at least one abutment friction element (82; 96a; 84b) on a second side of the ring-like friction element (78; 78a; 78b).

9. Torque transmission system according to one of Claims 1 to 8, **characterized in that** the friction device (72; 72a; 72b; 72c) comprises an elastic element (84; 84a; 84b) in the supporting path of the actuating force.

10. Torque transmission system according to one of Claims 1 to 9, **characterized in that** the friction clutch (14; 14b) is a double clutch (36; 36b) with a first clutch region (40; 40b) and a second clutch region (42; 42b), and **in that** the friction device (72; 72b) has a first friction device region (72b) which, when the actuating system produces actuating force for the first clutch region (40b), can produce the frictional coupling between primary side (16b) and secondary side (26b), and/or comprises a second friction device region (72) which, when the actuating system produces actuating force for the second clutch region (42), can produce the frictional coupling between primary side (16) and secondary side (26).

## Revendications

1. Système de transmission de couple, comprenant:
- un dispositif d'amortissement de vibrations (12 ; 12b ; 12c) comportant un côté primaire (16 ; 16a ; 16b ; 16c) à coupler à un organe moteur pour la rotation autour d'un axe de rotation (A), un côté secondaire (26 ; 26b ; 26c) pouvant tourner à l'encontre de l'effet d'un dispositif à ressort amortisseur (24 ; 24b ; 24c) par rapport au côté primaire (16 ; 16b ; 16c) autour de l'axe de rotation (A) et un dispositif à friction (72 ; 72a ; 72b ; 72c) pour générer un couplage à friction entre le côté primaire (16; 16b; 16c) et le côté secondaire (26 ; 26b; 26c),
- un embrayage à friction (14 ; 14a; 14b; 14c) sur le côté secondaire (26; 26b ; 26c) du dispositif d'amortissement de vibrations (12 ; 12b ; 12c),
- un système d'actionnement pour générer une force d'actionnement (F) pour l'actionnement de l'embrayage à friction (14 ; 14a ; 14b ; 14c) entre un état embrayé et un état débrayé et pour actionner le dispositif à friction (72 ; 72a ; 72b ; 72c),
**caractérisé en ce que**
le dispositif à friction (72 ; 72a ; 72b ; 72c), en cas de sollicitation par le dispositif d'actionnement, est commutable entre un état activé, dans lequel le couplage à friction peut être établi entre le côté primaire (16 ; 16b ; 16c) et le côté secondaire (26 ; 26b ; 26c), et un état désactivé, dans lequel sensiblement aucun couplage à friction ne peut être établi entre le côté primaire (16 ; 16b ; 16c) et le côté secondaire (26; 26b; 26c), le dispositif à friction (72 ; 72a ; 72b; 72c) présentant un premier agrégat de friction (74 ; 74a ; 74b ; 74c) couplé au côté primaire (16; 16b ; 16c) et un deuxième agrégat de friction (76; 76a ; 76b ; 76c) couplé au côté secondaire (26 ; 26b ; 26c) et, en état activé du dispositif à friction (72 ; 72a ; 72b ; 72c), par sollicitation au moyen d'une force d'actionnement à l'aide du système d'actionnement, une interaction de friction pouvant être établie entre le premier agrégat de friction (74 ; 74a; 74b; 74c) et le deuxième agrégat de friction (76; 76a ; 76b ; 76c), au moins un agrégat sur le premier agrégat de friction (74 ; 74a ; 74b ; 74c) et le deuxième agrégat de friction (76; 76a ; 76b ; 76c) comportant au moins un élément d'agrégat (86 ; 86a ; 86b ; 86c) qui, pour commuter le dispositif à friction (72 ; 72a ; 72b ; 72c), est permutable entre l'état activé dans lequel il peut provoquer une interaction des agrégats de friction et l'état désactivé dans lequel il ne peut provoquer sensiblement aucune interaction des agrégats de friction, du fait que l'au moins un élément d'agrégat (86 ; 86a ; 86b ; 86c) est précontraint par un ressort de précontrainte (90 ; 90b ; 90c) en état activé et est permutable en état désactivé par l'effet de force de réglage intervenant sous l'effet de la force centrifuge.

2. Système de transmission de couple selon la revendication 1,
**caractérisé en ce que** l'au moins un élément d'agrégat (86 ; 86a ; 86b ; 86c), sur le côté couplé à l'agrégat de friction du côté primaire (16 ; 16b ; 16c) et du côté secondaire (26 ; 26b ; 26c), est supporté de manière pivotable entre l'état activé et l'état désactivé.

3. Système de transmission de couple selon l'une quelconque des revendications 1 ou 2,
**caractérisé en ce que** la précontrainte et l'effet de force de réglage sont définis l'un en fonction de l'autre de manière à ce qu'en cas d'atteinte d'un régime prédéfini ou d'une plage de régime prédéfinie, il puisse y avoir une permutation de l'au moins un élément d'agrégat (86 ; 86a ; 86b; 86c) entre l'état activé et l'état désactivé.

4. Système de transmission de couple selon la revendication 1 et la revendication 3,
**caractérisé en ce qu'**en cas d'accroissement du régime, la précontrainte compense du moins par endroits l'effet de la force centrifuge jusqu'à l'atteinte du régime prédéfini ou de la plage de régime prédéfinie.

5. Système de transmission de couple selon l'une quelconque des revendications 1 à 4,
**caractérisé en ce qu'**en cas de génération d'une force d'actionnement par le système d'actionnement pour la permutation de l'embrayage à friction entre l'état embrayé et l'état débrayé, une première partie de la force d'actionnement agit comme force d'embrayage et une deuxième partie de la force d'actionnement agit comme force d'actionnement du dispositif à friction.

6. Système de transmission de couple selon l'une quelconque des revendications 1 à 5,
**caractérisé en ce que** l'autre agrégat de friction comprend un élément de friction de forme annulaire (78 ; 78a ; 78b; 78c) et que l'au moins un élément d'agrégat (86 ; 86a ; 86b ; 86c) peut être amené par le système d'actionnement, en cas de génération de force d'actionnement, en interaction de friction avec l'élément de friction de forme annulaire (78 ; 78a ; 78b ; 78c).

7. Système de transmission de couple selon la revendication 6,
**caractérisé en ce que** le premier agrégat de friction comporte une pluralité d'éléments d'agrégat (86 ; 86a ; 86b ; 86c) disposés en succession dans le sens circonférentiel.

8. Système de transmission de couple selon la revendication 6 ou 7,
**caractérisé en ce que** le premier agrégat de friction comporte, sur un premier côté de l'élément de friction de forme annulaire (78 ; 78a ; 78b) de l'autre agrégat de friction, l'au moins un élément d'agrégat (86 ; 86a ; 86b) et comporte, sur un deuxième côté de l'élément de friction de forme annulaire (78 ; 78a ; 78b), au moins un élément de friction à contre-palier (82; 96a ; 84b).

9. Système de transmission de couple selon l'une quelconque des revendications 1 à 8,
**caractérisé en ce que** le dispositif à friction (72 ; 72a ; 72b ; 72c) comporte, dans la voie d'appui de la force d'actionnement, un élément élastique (84 ; 84a ; 84b).

10. Système de transmission de couple selon l'une quelconque des revendications 1 à 9,
**caractérisé en ce que** l'embrayage à friction (14; 14b) est un double embrayage (36 ; 36b) comportant une première zone d'embrayage (40 ; 40b) et une deuxième zone d'embrayage (42 ; 42b) et que le dispositif à friction (72 ; 72b) présente une première zone de dispositif à friction (72b) qui, en cas de génération de force d'actionnement par le système d'actionnement pour la première zone d'embrayage (40b), peut établir le couplage à friction entre le côté primaire (16b) et le côté secondaire (26b) et/ou englobe une deuxième zone de dispositif à friction (72) qui, en cas de génération de force d'actionnement par le système d'actionnement pour la deuxième zone d'embrayage (42), peut établir le couplage à friction entre le côté primaire (16) et le côté secondaire (26).
